# EUROPEAN PATENT APPLICATION

(11) **EP 4 765 670 A1**
(43) Date of publication of application: **24.06.2026**
(21) Application number: 23948860.4
(22) Date of filing: 16.08.2023
(51) Int. Cl.: H04B 7/08

(54) **METHOD IN NODE USED FOR WIRELESS COMMUNICATIONS, AND APPARATUS**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/113404
(87) International publication number: WO 2025/035431

(57) **Abstract**

The present application provides a method for a node used for wireless communication and an apparatus, to implement initial beam pairing based on a sidelink-synchronization signal block. The method includes: receiving first information, where the first information is used to determine whether to perform a first operation. The first operation includes at least one of initial beam pairing, sidelink unicast link establishment, or sidelink beam management, and the first information is used to determine whether to transmit a first sidelink-synchronization signal block related to the first operation, and/or the first information is used to determine a transmit parameter of the first sidelink-synchronization signal block.

## Description

### TECHNICAL FIELD

The present application relates to the field of communications technologies, and more specifically, to a method for a node used for wireless communication and an apparatus.

### BACKGROUND

In some scenarios for performing initial beam pairing in sidelink communication, a sidelink-synchronization signal block or a modified format of a sidelink-synchronization signal block being used as a reference signal of the initial beam pairing has become an optional solution. However, a specific condition is required to be met when a user equipment transmits the sidelink-synchronization signal block. Therefore, how to perform initial beam pairing based on a sidelink-synchronization signal block and how to transmit a synchronization signal block when a user equipment does not meet a condition are technical problems to be solved.

### SUMMARY

Embodiments of the present application provide a method for a node used for wireless communication and an apparatus. Various aspects involved in the present application are described below.

According to a first aspect, a method for a first node used for wireless communication is provided, and the method includes: receiving first information, where the first information is used to determine whether to perform a first operation. The first operation includes at least one of initial beam pairing, sidelink unicast link establishment, or sidelink beam management, and the first information is used to determine whether to transmit a first sidelink-synchronization signal block related to the first operation, and/or the first information is used to determine a transmit parameter of the first sidelink-synchronization signal block.

In an implementation, the first information indicates whether to perform the first operation; or the first information includes a first frequency, and the first frequency is used for the first operation, or the first frequency is not used for the first operation.

In an implementation, the first information indicates that the first operation is to be performed, and the first operation is related to a first frequency; or the first information includes the first frequency, and the first frequency is used for the first operation; and the first sidelink-synchronization signal block is transmitted at the first frequency.

In an implementation, the first information indicates that the first operation is not to be performed; or the first information includes the first frequency, and the first frequency is not used for the first operation; and the first sidelink-synchronization signal block is not to be transmitted.

In an implementation, first signal measurement is performed. Whether to transmit the first sidelink-synchronization signal block is determined depending on whether a result of the first signal measurement is less than a first threshold, and the first information is used to determine the first threshold.

In an implementation, the first threshold is one of a plurality of candidate thresholds, and the first information is used to determine the first threshold from the plurality of candidate thresholds.

In an implementation, the plurality of candidate thresholds include a target threshold; and when the first information is used to determine that the first operation is to be performed, the first threshold is equal to the target threshold; when the first information is used to determine that the first operation is not to be performed, the first threshold is a candidate threshold, different from the target threshold, in the plurality of candidate thresholds.

In an implementation, when the first information is used to determine that the first operation is to be performed, the first threshold is a sum of a first reference threshold and a first threshold offset, and the first threshold offset is not 0; when the first information is used to determine that the first operation is not to be performed, the first threshold is the first reference threshold.

In an implementation, the transmit parameter of the first sidelink-synchronization signal block includes at least one of time allocation of the first sidelink-synchronization signal block, a transmission quantity corresponding to the first sidelink-synchronization signal block, or a transmission period corresponding to the first sidelink-synchronization signal block.

In an implementation, first signal measurement is performed. A result of the first signal measurement is used to determine the transmit parameter of the first sidelink-synchronization signal block.

In an implementation, the transmit parameter of the first sidelink-synchronization signal block is determined depending on whether the result of the first signal measurement is less than a first threshold. When the result of the first signal measurement is less than the first threshold, the transmit parameter of the first sidelink-synchronization signal block is determined based on a first candidate parameter, and at least one parameter in the transmit parameter of the first sidelink-synchronization signal block is different from the first candidate parameter. When the result of the first signal measurement is not less than the first threshold, the transmit parameter of the first sidelink-synchronization signal block is determined as the first candidate parameter.

In an implementation, the transmit parameter of the first sidelink-synchronization signal block is one of a plurality of sets of candidate parameters, and at least one of the first information or the result of the first signal measurement is used to determine the transmit parameter of the first sidelink-synchronization signal block from the plurality of sets of candidate parameters.

In an implementation, the plurality of sets of candidate parameters include a target parameter; and when the first information is used to determine that the first operation is to be performed, the transmit parameter of the first sidelink-synchronization signal block is set to the target parameter; when the first information is used to determine that the first operation is not to be performed, the transmit parameter of the first sidelink-synchronization signal block is set to a set of candidate parameters, different from the target parameter, in the plurality of sets of candidate parameters.

In an implementation, the plurality of sets of candidate parameters include a target parameter. When the result of the first signal measurement is less than a first threshold, the transmit parameter of the first sidelink-synchronization signal block is set to the target parameter. When the result of the first signal measurement is not less than the first threshold, the transmit parameter of the first sidelink-synchronization signal block is set to a set of candidate parameters, different from the target parameter, in the plurality of sets of candidate parameters.

In an implementation, when the first information is used to determine that the first operation is to be performed, the transmit parameter of the first sidelink-synchronization signal block is determined based on a first candidate parameter, and at least one parameter in the transmit parameter of the first sidelink-synchronization signal block is different from the first candidate parameter; when the first information is used to determine that the first operation is not to be performed, the transmit parameter of the first sidelink-synchronization signal block is determined as the first candidate parameter.

In an implementation, the second information is received, and the second information is used to determine whether to transmit a second sidelink-synchronization signal block, The second information includes a second frequency, the second frequency is used to perform sidelink communication or sidelink discovery, and the sidelink communication or sidelink discovery is related to the second sidelink-synchronization signal block.

According to a second aspect, a method for a second node used for wireless communication is provided, and the method includes: transmitting first information to a first node, where the first information is used to determine whether the first node performs a first operation. The first operation includes at least one of initial beam pairing, sidelink unicast link establishment, or sidelink beam management, and the first information is used to determine whether the first node transmits a first sidelink-synchronization signal block related to the first operation, and/or the first information is used to determine a transmit parameter of the first sidelink-synchronization signal block.

In an implementation, the first information indicates whether the first node performs the first operation; or the first information includes a first frequency, and the first frequency is used for the first operation, or the first frequency is not used for the first operation.

In an implementation, second information is transmitted to the first node, where the second information is used to determine whether the first node transmits a second sidelink-synchronization signal block. The second information includes a second frequency, the second frequency is used by the first node to perform sidelink communication or sidelink discovery, and the sidelink communication is related to the second sidelink-synchronization signal block.

According to a third aspect, a method for a third node used for wireless communication is provided, and the method includes: performing reception of a first sidelink-synchronization signal block at a first frequency. The first sidelink-synchronization signal block is related to a first operation, the first operation includes at least one of initial beam pairing, sidelink unicast link establishment, or sidelink beam management, the first information is used to determine whether the first node performs the first operation, and the first information is further used to determine whether the first node transmits the first sidelink-synchronization signal block, and/or the first information is further used to determine a transmit parameter of the first sidelink-synchronization signal block.

In an implementation, the first information indicates whether the first node performs the first operation; or the first information includes a first frequency, and the first frequency is used for the first operation, or the first frequency is not used for the first operation.

In an implementation, the received first sidelink-synchronization signal block is used for the first operation.

According to a fourth aspect, a first node for wireless communication is provided, and the first node includes a first receiver, receiving first information. The first information is used to determine whether to perform a first operation. The first operation includes at least one of initial beam pairing, sidelink unicast link establishment, or sidelink beam management, and the first information is used to determine whether to transmit a first sidelink-synchronization signal block related to the first operation, and/or the first information is used to determine a transmit parameter of the first sidelink-synchronization signal block.

In an implementation, the first information indicates whether to perform the first operation; or the first information includes a first frequency, and the first frequency is used for the first operation, or the first frequency is not used for the first operation.

In an implementation, the first information indicates that the first operation is to be performed, and the first operation is related to a first frequency; or the first information includes the first frequency, and the first frequency is used for the first operation. The first node further includes a first transmitter, transmitting the first sidelink-synchronization signal block at the first frequency.

In an implementation, the first information indicates that the first operation is not to be performed; or the first information includes the first frequency, and the first frequency is not used for the first operation. The first node further includes a second transmitter, skipping transmission of the first sidelink-synchronization signal block.

In an implementation, the first node further includes a first processor, configured to perform first signal measurement. Whether to transmit the first sidelink-synchronization signal block is determined depending on whether a result of the first signal measurement is less than a first threshold, and the first information is used to determine the first threshold.

In an implementation, the first threshold is one of a plurality of candidate thresholds, and the first information is used to determine the first threshold from the plurality of candidate thresholds.

In an implementation, the plurality of candidate thresholds include a target threshold; and when the first information is used to determine that the first operation is to be performed, the first threshold is equal to the target threshold; when the first information is used to determine that the first operation is not to be performed, the first threshold is a candidate threshold, different from the target threshold, in the plurality of candidate thresholds.

In an implementation, when the first information is used to determine that the first operation is to be performed, the first threshold is a sum of a first reference threshold and a first threshold offset, and the first threshold offset is not 0; when the first information is used to determine that the first operation is not to be performed, the first threshold is the first reference threshold.

In an implementation, the transmit parameter of the first sidelink-synchronization signal block includes at least one of time allocation of the first sidelink-synchronization signal block, a transmission quantity corresponding to the first sidelink-synchronization signal block, or a transmission period corresponding to the first sidelink-synchronization signal block.

In an implementation, the first node further includes a second processor, performing first signal measurement. A result of the first signal measurement is used to determine a transmit parameter of the first sidelink-synchronization signal block.

In an implementation, the transmit parameter of the first sidelink-synchronization signal block is determined depending on whether the result of the first signal measurement is less than a first threshold. When the result of the first signal measurement is less than the first threshold, the transmit parameter of the first sidelink-synchronization signal block is determined based on a first candidate parameter, and at least one parameter in the transmit parameter of the first sidelink-synchronization signal block is different from the first candidate parameter. When the result of the first signal measurement is not less than the first threshold, the transmit parameter of the first sidelink-synchronization signal block is determined as the first candidate parameter.

In an implementation, the transmit parameter of the first sidelink-synchronization signal block is one of a plurality of sets of candidate parameters, and at least one of the first information or the result of the first signal measurement is used to determine the transmit parameter of the first sidelink-synchronization signal block from the plurality of sets of candidate parameters.

In an implementation, the plurality of sets of candidate parameters include a target parameter. When the first information is used to determine that the first operation is to be performed, the transmit parameter of the first sidelink-synchronization signal block is set to the target parameter. When the first information is used to determine that the first operation is not to be performed, the transmit parameter of the first sidelink-synchronization signal block is set to a set of candidate parameters, different from the target parameter, in the plurality of sets of candidate parameters.

In an implementation, the plurality of sets of candidate parameters include a target parameter. When the result of the first signal measurement is less than a first threshold, the transmit parameter of the first sidelink-synchronization signal block is set to the target parameter. When the result of the first signal measurement is not less than the first threshold, the transmit parameter of the first sidelink-synchronization signal block is set to a set of candidate parameters, different from the target parameter, in the plurality of sets of candidate parameters.

In an implementation, when the first information is used to determine that the first operation is to be performed, the transmit parameter of the first sidelink-synchronization signal block is determined based on a first candidate parameter, and at least one parameter in the transmit parameter of the first sidelink-synchronization signal block is different from the first candidate parameter; when the first information is used to determine that the first operation is not to be performed, the transmit parameter of the first sidelink-synchronization signal block is determined as the first candidate parameter.

In an implementation, the first receiver is further configured to receive second information, and the second information is used to determine whether to transmit a second sidelink-synchronization signal block. The second information includes a second frequency, the second frequency is used to perform sidelink communication or sidelink discovery, and the sidelink communication or sidelink discovery is related to the second sidelink-synchronization signal block.

According to a fifth aspect, a second node for wireless communication is provided, and the second node includes a third transmitter, transmitting first information to a first node, where the first information is used to determine whether the first node performs a first operation. The first operation includes at least one of initial beam pairing, sidelink unicast link establishment, or sidelink beam management, and the first information is used to determine whether the first node transmits a first sidelink-synchronization signal block related to the first operation, and/or the first information is used to determine a transmit parameter of the first sidelink-synchronization signal block.

**In** an implementation, the first information indicates whether the first node performs the first operation; or the first information includes a first frequency, and the first frequency is used for the first operation, or the first frequency is not used for the first operation.

In an implementation, the third transmitter is further configured to transmit second information to the first node, and the second information is used to determine whether the first node transmits a second sidelink-synchronization signal block. The second information includes a second frequency, the second frequency is used by the first node to perform sidelink communication or sidelink discovery, and the sidelink communication or sidelink discovery is related to the second sidelink-synchronization signal block.

According to a sixth aspect, a third node for wireless communication is provided, and the third node includes a second receiver, performing receiving of a first sidelink-synchronization signal block at a first frequency. The first sidelink-synchronization signal block is related to a first operation, the first operation includes at least one of initial beam pairing, sidelink unicast link establishment, or sidelink beam management, the first information is used to determine whether the first node performs the first operation, and the first information is further used to determine whether the first node transmits the first sidelink-synchronization signal block, and/or the first information is further used to determine a transmit parameter of the first sidelink-synchronization signal block.

In an implementation, the first information indicates whether the first node performs the first operation; or the first information includes a first frequency, and the first frequency is used for the first operation, or the first frequency is not used for the first operation.

In an implementation, the received first sidelink-synchronization signal block is used for the first operation.

According to a seventh aspect, a first node used for a wireless communication is provided, and the first node includes a transceiver, a memory, and a processor. The memory is configured to store a program, and the processor is configured to invoke the program in the memory and control the transceiver to receive or transmit a signal, so as to cause the first node to execute the method according to any one of the implementations of the first aspect.

According to an eighth aspect, a second node used for a wireless communication is provided, and the second node includes a transceiver, a memory, and a processor. The memory is configured to store a program, and the processor is configured to invoke the program in the memory and control the transceiver to receive or transmit a signal, so as to cause the second node to execute the method according to any one of the implementations of the second aspect.

According to a ninth aspect, a third node used for a wireless communication is provided, and the third node includes a transceiver, a memory, and a processor, where the memory is configured to store a program, and the processor is configured to invoke the program in the memory and control the transceiver to receive or transmit a signal, so as to cause the third node to execute the method according to any one of the implementations of the third aspect.

According to a tenth aspect, an embodiment of the present application provides a communications system, where the system includes the foregoing first node and/or the foregoing second node and/or the foregoing third node. In another possible design, the system may further include another device that interacts with the first node, or the second node, or the third node in the solution provided in embodiments of the present application.

According to an eleventh aspect, an embodiment of the present application provides a computer-readable storage medium. The computer-readable storage medium stores a computer program, and the computer program causes a computer to execute some or all steps of the methods in the foregoing aspects.

According to a twelfth aspect, an embodiment of the present application provides a computer program product. The computer program product includes a non-transitory computer-readable storage medium that stores a computer program, and the computer program is operable to cause a computer to execute some or all of steps of the methods in the foregoing aspects. In some implementations, the computer program product may be a software installation package.

According to a thirteenth aspect, an embodiment of the present application provides a chip. The chip includes a memory and a processor, and the processor may invoke and run a computer program from the memory, so as to implement some or all of steps described in the methods in the foregoing aspects.

In embodiments of the present application, first information received by a first node may indicate whether to perform initial beam pairing. It can be seen that whether to perform initial beam pairing may be used as a condition for determining whether the first node transmits a sidelink-synchronization signal block, which facilitates implementation of valid initial beam pairing between the first node and another node by using an S-SSB.

In embodiments of the present application, the first node may determine, based on an indication of the first information, whether to transmit a sidelink-synchronization signal block, so as to implement necessary and valid transmission of the sidelink-synchronization signal block by the first node.

In embodiments of the present application, any two nodes in sidelink communication perform initial beam pairing before sidelink unicast link establishment. A unicast link is established by using paired beams, and a link range between a transmit node and a receive node may be increased, so that more nodes can implement advanced business cases.

In embodiments of the present application, initial beam pairing is performed before a sidelink unicast link is established, so as to effectively avoid a case that a direct communication request message with relatively large resource overheads is transmitted by a transmit node on all beams in a beam sweeping manner, thereby significantly reducing resource waste.

### BRIEF DESCRIPTION OF THE DRAWINGS

FIG. 1 is an example diagram of a system architecture of a wireless communications system to which embodiments of the present application are applicable.
FIG. 2 is a schematic diagram of a slot structure of a sidelink-synchronization signal block.
FIG. 3 is a schematic diagram of a condition in which a UE transmits a sidelink-synchronization signal block.
FIG. 4 is a schematic flowchart of a method for a first node used for wireless communication according to an embodiment of the present application.
FIG. 5 is a schematic flowchart of an implementation of initial beam pairing in a first operation.
FIG. 6 is a schematic flowchart of another implementation of initial beam pairing in a first operation.
FIG. 7 is a schematic flowchart of an implementation of sidelink unicast link establishment in a first operation.
FIG. 8 is a schematic flowchart of a possible implementation of the method illustrated in FIG. 4.
FIG. 9 is a schematic structural diagram of a possible implementation of a first S-SSB.
FIG. 10 is a schematic flowchart of another possible implementation of the method illustrated in FIG. 4.
FIG. 11 is a schematic flowchart of still another possible implementation of the method illustrated in FIG. 4.
FIG. 12 is a schematic flowchart of still another possible implementation of the method illustrated in FIG. 4.
FIG. 13 is a schematic flowchart of still another possible implementation of the method illustrated in FIG. 4.
FIG. 14 is a schematic flowchart of still another possible implementation of the method illustrated in FIG. 4.
FIG. 15 is a schematic flowchart of still another possible implementation of the method illustrated in FIG. 4.
FIG. 16 is a schematic structural diagram of a first node used for wireless communication according to an embodiment of the present application.
FIG. 17 is a schematic structural diagram of a second node used for wireless communication according to an embodiment of the present application.
FIG. 18 is a schematic structural diagram of a third node used for wireless communication according to an embodiment of the present application.
FIG. 19 is a schematic structural diagram of an apparatus according to an embodiment of the present application.
FIG. 20 is a schematic diagram of hardware modules of a communications device according to an embodiment of the present application.

### DETAILED DESCRIPTION OF THE EMBODIMENTS

The following describes the technical solutions in embodiments of the present application with reference to the accompanying drawings in embodiments of the present application. Apparently, the described embodiments are some rather than all of embodiments of the present application. All other embodiments obtained by a person of ordinary skill in the art based on embodiments of the present application without creative efforts shall fall within the protection scope of the present application.

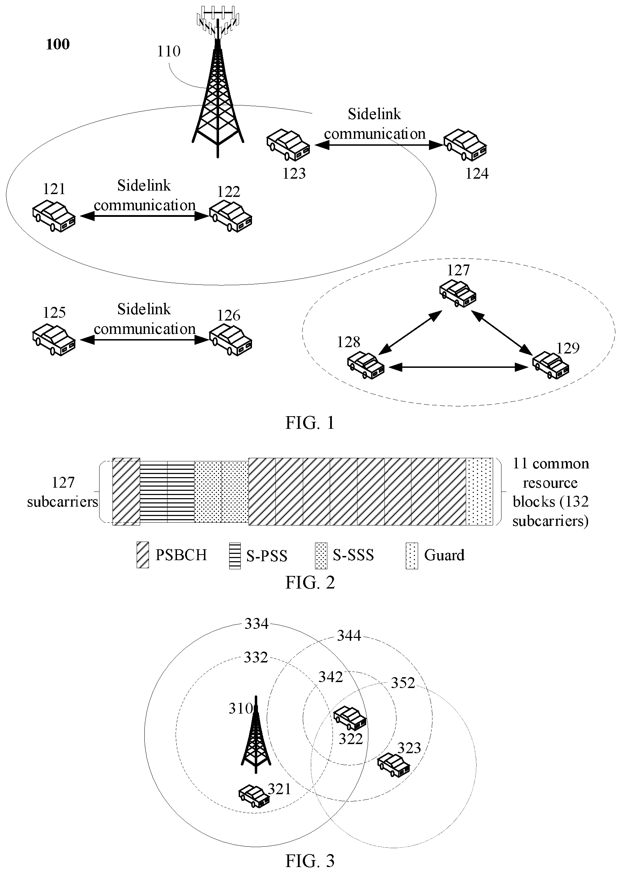

FIG. 1 is an example diagram of a system architecture of a wireless communications system 100 to which embodiments of the present application are applicable. The wireless communications system 100 may include a network device 110 and user equipments 121 to 129. The network device 110 can provide communication coverage for a specific geographic area, and can communicate with terminals within the coverage.

In some implementations, user equipments (user equipment, UE) may communicate with each other over sidelink (sidelink, SL). The sidelink communication may also be referred to as proximity based service (proximity based services, ProSe) communication, unilateral communication, sidelink communication, device-to-device (device-to-device, D2D) communication, or the like.

In other words, sidelink data is transmitted between user equipments over sidelink. The sidelink data may include data and/or control signalling. In some implementations, the sidelink data may be, for example, a physical sidelink control channel (physical sidelink control channel, PSCCH), a physical sidelink shared channel (physical sidelink shared channel, PSSCH), a PSCCH demodulation reference signal (demodulation reference signal, DMRS), a PSSCH DMRS, or a physical sidelink feedback channel (physical sidelink feedback channel, PSFCH).

Several common sidelink communication scenarios are described below with reference to FIG. 1. Sidelink communication may include three scenarios depending on whether user equipments in the sidelink are within coverage of a network device. In scenario 1, the user equipments perform sidelink communication within the coverage of the network device. In scenario 2, the user equipments perform sidelink communication partially within the coverage of the network device. In scenario 3, the user equipments perform sidelink communication outside the coverage of the network device.

As shown in FIG. 1, in scenario 1, user equipments 121 and 122 may communicate with each other over sidelink, and the user equipments 121 and 122 are both within the coverage of the network device 110, or in other words, the user equipments 121 and 122 are both within the coverage of the same network device 110. In this scenario, the network device 110 may transmit configuration signalling to the user equipments 121 and 122; and accordingly, the user equipments 121 and 122 communicate with each other over sidelink based on the configuration signalling.

As shown in FIG. 1, in scenario 2, user equipments 123 and 124 may communicate with each other over sidelink, and the user equipment 123 is within the coverage of the network device 110, while the user equipment 124 is outside the coverage of the network device 110. In this scenario, the user equipment 123 receives configuration information from the network device 110, and communicates over the sidelink based on a configuration of the configuration signaling. However, since the user equipment 124 is outside the coverage of the network device 110, the user equipment 124 cannot receive the configuration information from the network device 110. In this case, the user equipment 124 may obtain a configuration of the sidelink communication based on preconfigured (pre-configuration) configuration information and/or the configuration information transmitted by the user equipment 123 within the coverage, so as to communicate with the user equipment 123 over sidelink based on the obtained configuration.

In some cases, the user equipment 123 may transmit the configuration information to the user equipment 124 through a physical sidelink broadcast channel (physical sidelink broadcast channel, PSBCH), so as to configure the user equipment 124 to communicate over sidelink.

As shown in FIG. 1, in scenario 3, user equipments 125 to 129 are all outside the coverage of the network device 110 and cannot communicate with the network device 110. In this case, all the user equipments may perform sidelink communication based on pre-configuration information.

In some cases, the user equipments 127 to 129 outside the coverage of the network device may form a communication cluster; and the user equipments 127 to 129 in the communication cluster may communicate with each other. In addition, the user equipment 127 in the communication cluster may serve as a central control node, also referred to as a cluster header (cluster header, CH) terminal. Correspondingly, other user equipments in the communication cluster may be referred to as "cluster members".

It should be noted that, FIG. 1 exemplarily shows one network device and a plurality of user equipments. Optionally, the wireless communications system 100 may include a plurality of network devices, and another number of user equipments may be included in coverage of each network device, which is not limited in embodiments of the present application.

Optionally, the wireless communications system 100 may further include another network entity such as a network controller or a mobility management entity, which is not limited in embodiments of the present application.

It should be understood that the technical solutions of embodiments of the present application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in the present application may further be applied to a future communications system, such as a 6^{th} generation mobile communications system or a satellite communications system.

The user equipment in embodiments of the present application may also be referred to as a terminal device, an access terminal, a subscriber unit, a subscriber station, a mobile site, a mobile station (mobile station, MS), a mobile terminal (mobile Terminal, MT), a remote station, a remote terminal, a mobile device, a user terminal, a wireless communications device, a user agent, or a user apparatus. The user equipment in embodiments of the present application may be a device providing a user with voice and/or data connectivity and may be used to connect people, objects, and machines, such as a handheld device or vehicle-mounted device having a wireless connection function. The user equipment in embodiments of the present application may be a mobile phone (mobile phone), a tablet computer (Pad), a notebook computer, a palmtop computer, a mobile internet device (mobile internet device, MID), a wearable device, a vehicle, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in smart city (smart city), a wireless terminal in smart home (smart home), or the like. Optionally, the user equipment may act as a base station. For example, the user equipment may act as a scheduling entity, which provides a sidelink signal between user equipments in vehicle-to-everything (vehicle-to-everything, V2X) or D2D, or the like. For example, a cellular phone and a car communicate with each other using sidelink data. A cellular phone and a smart home device communicate with each other, without relay of a communication signal through a base station.

The network device in embodiments of the present application may be a device for communicating with the user equipment. The network device may also be referred to as an access network device or a wireless access network device. For example, the network device may be a base station. The network device in embodiments of the present application may be a radio access network (radio access network, RAN) node (or device) that connects the user equipment to a wireless network. The base station may broadly cover the following various names, or may be replaced with the following names: a NodeB (NodeB), an evolved NodeB (evolved NodeB, eNB), a next generation NodeB (next generation NodeB, gNB), a relay station, a transmitting and receiving point (transmitting and receiving point, TRP), a transmitting point (transmitting point, TP), an access point (access point, AP), a master MeNB, a secondary SeNB, a multi-standard radio (MSR) node, a home base station, a network controller, an access node, a wireless node, a transmission node, a transceiver node, a base band unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that functions as a base station in D2D, V2X, and machine-to-machine (machine-to-machine, M2M) communication, a network-side device in a 6G network, a device that functions as a base station in a future communications system, or the like. The base station may support networks with a same access technology or different access technologies. A specific technology and a specific device form used by the network device are not limited in embodiments of this application.

The base station may be a fixed or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of the present application may be a CU or a DU, or the network device includes a CU and a DU. The gNB may further include an AAU.

The network device and the user equipment may be deployed on land, including being indoors or outdoors, handheld, or in-vehicle, may be deployed on a water surface, or may be deployed on a plane, a balloon, or a satellite in the air. A scenario in which the network device and the user equipment are located is not limited in embodiments of the present application.

It should be understood that all or part of the functions of the communications device in the present application may also be implemented by software functions running on hardware, or by virtualization functions instantiated on a platform (such as a cloud platform).

For ease of understanding, some related technical knowledge related to embodiments of the present application is first introduced. The following related technologies, as optional solutions, may be randomly combined with the technical solutions of embodiments of the present application, all of which fall within the protection scope of embodiments of the present application. Embodiments of the present application include at least part of the following content.

It should be understood that, for explanation of the terms (Terminology) in embodiments of the present application, reference may be made to descriptions in specification protocols TS36 series, TS37 series, and TS38 series of the 3rd Generation Partnership Project (3rd generation partnership project, 3GPP), and reference may also be made to descriptions in specification protocols of the Institute of Electrical and Electronics Engineers (Institute of Electrical and Electronics Engineers, IEEE).

With the development of communications technologies, technical research and standardization about sidelink communication are expanding gradually. The sidelink communication developed in an RAN of 5G NR release-16 (Release-16, Rel-16) is mainly used to support an advanced V2X application. In Rel-17, a system architecture working group 2 (system architecture 2, SA2) specializes in research and standardization for ProSe including public safety (public safety) and a commercial related service (commercial related service). As a part of Rel-17, to reduce power consumption for a battery-constrained user and improve reliability of sidelink communication, a radio access network working group 1 (RAN1) and RAN2 developed power saving technologies (such as a partial sensing (partial sensing) technology, a discontinuous reception (discontinuous reception, DRX) technology, and an inter-UE coordination (Inter-UE coordination, IUC) technology).

An application field of the sidelink communication is also expanding gradually. Exemplarily, although an NR SL was originally developed to support a V2X application, the industry has become increasingly keen to expand the NR SL to more commercial cases. For example, in a highly autonomous driving technology, a large amount of sensor information is required to be shared among vehicles.

Due to continuous expansion of the application field of sidelink communication, higher requirements are put forward for the NR SL. These requirements include two key requirements: increasing a sidelink data rate and supporting more new carriers on sidelink. A transmission bandwidth may be expanded by adding more new carriers, thereby further increasing the data rate.

It can be learned from the 3GPP project RP-222806 that, for study of supporting new carriers, the NR SL evolution (evolution) of Rel-18 mainly focuses on sidelink beam management (sidelink beam management, SL BM). The sidelink beam management generally includes initial beam pairing (initial beam-pairing), beam maintenance (beam maintenance), beam failure recovery (beam failure recovery, BFR), and the like.

A relationship between PC5/sidelink unicast link establishment (unicast link establishment) and sidelink initial beam pairing includes the following three candidate procedures (candidate procedures):
Candidate procedure 1: initial beam pairing is performed before sidelink unicast link establishment between a UE 1 and a UE 2.
Candidate procedure 2: initial beam pairing is performed during sidelink unicast link establishment between the UE 1 and the UE 2.
Candidate procedure 3: initial beam pairing starts after sidelink unicast link establishment between the UE 1 and the UE 2.

For a reference signal used in the candidate procedure 1, at the 3GPP RAN1 meeting, it has been agreed to use a sidelink synchronization broadcast signal block (SL synchronization signal/physical sidelink broadcast channel block, S-SS/PSBCH block, S-SSB) or an improved format based on the S-SSB as an optional solution.

In a conventional design of an NR S-SSB, an S-SSB includes a sidelink primary synchronization signal (sidelink primary synchronization signal, S-PSS), a sidelink secondary synchronization signal (sidelink secondary synchronization signal, S-SSS), and a PSBCH. Generally, the S-SSB occupies one slot in time domain. The S-SSB uses a numerology (numerology) configured for an SL bandwidth part (bandwidth part, BWP), including a subcarrier spacing, a cyclic prefix (cyclic prefix, CP) length, and the like. In one SL BWP, frequency division multiplexing (frequency division multiplexing, FDM) cannot be used for transmission of the S-SSB and transmission of another sidelink physical channel. Therefore, invalid transmission of S-SSB(s) increases resource consumption, and also seriously affects available resources for another physical SL channel/signal.

For ease of understanding, the following exemplarily describes a structure of a slot for an S-SSB with reference to FIG. 2. Referring to FIG. 2, one slot for the S-SSB includes an S-PSS and an S-SSS each occupying two symbols, a PSBCH, and a guard symbol (guard symbol) at the end. In the structure shown in FIG. 2, in an S-SSB slot of a normal CP, a first symbol (namely, a first PSBCH symbol) may be used for automatic gain control (automatic gain control, AGC), second and third symbols are used to carry the S-PSS, fourth and fifth symbols are used to carry the S-SSS, a last symbol is used as the guard symbol, and other symbols are used to carry a PSBCH.

As shown in FIG. 2, the S-SSB crosses 11 common resource blocks (common resource blocks, Common RBs), namely, 132 subcarriers, of one SL BWP in frequency domain. The S-PSSs and the S-SSSs occupy 127 subcarriers. A frequency domain location of the S-SSB in the SL BWP is pre-configuration or configured. Therefore, a receive UE (including the UE 1) of the S-SSB is unnecessary to perform blind detection in frequency domain to find the S-SSB.

Transmitting the S-SSB by a UE is to extend coverage of a synchronization reference source (synchronization reference source). Specifically, in the NR SL, a global navigation satellite system (global navigation satellite system, GNSS), a gNB/eNB, or an NR SL UE (namely, a synchronization reference UE, SyncRefUE) may be used as a synchronization reference source of a UE. The SyncRefUE may enable surrounding UEs to have a same timing reference by transmitting synchronization information (for example, an S-SSB).

In a conventional design of an S-SSB, one or more S-SSBs are transmit in a fixed period (namely, 160 ms, 16 radio frames). In one S-SSB cycle, a number of a plurality of S-SSBs is pre-configured or configurable, depending on a subcarrier spacing (subcarrier spacing, SCS) and a frequency range (frequency range), as shown in Table 1. Table 1 shows a quantity of S-SSBs transmitted in one S-SSB period.

**Table 1**

| Frequency range (frequency range) | Subcarrier spacing (SCS) | Quantity of S-SSBs per period (number of S-SSBs per period) |
|---|---|---|
| FR1 | 15 kHz | 1 |
| | 30 kHz | 1.2 |
| | 60 kHz | 1, 2, 4 |
| FR2 | 60 kHz | 1, 2, 4, 8, 16, 32 |
| | 120 kHz | 1, 2, 4, 8, 16, 32, 64 |

The foregoing describes a plurality of candidate procedures for performing initial beam pairing. In an example, an operation procedure of performing initial beam pairing by using an S-SSB as a reference signal in the candidate procedure 1 may be as follows:
a UE 1 transmits a plurality of S-SSBs in a beam sweeping (beam sweeping) manner;
a UE 2 performs reference signal received power (reference signal received power, RSRP) measurement on a sidelink synchronization signal (SL synchronization signal, SLSS) and/or a PSBCH, and the UE 2 determines a transmit beam of the UE 1 and a receive beam of the UE 2 based on a measured RSRP; and
for a determined transmit beam of the UE 1, the UE 2 performs associated beam reporting.

However, in a conventional design of NR SL, transmitting of an S-SSB by a UE 1 is required to meet a specific condition. The following exemplarily describes a case in which the UE 1 is unnecessary to transmit the S-SSB.

The UE 1 is unnecessary to transmit the S-SSB when performing SL transmission with a UE that uses same SL timing reference. For example, by detecting an S-SSB transmitted by a SyncRefUE, the UE 1 may be synchronized with the SyncRefUE, and may estimate a start location and a carrier frequency offset (carrier frequency offsets) of a radio frame. Further, by using SL timing reference (timing reference) provided by the SyncRefUE, the UE 1 may perform SL transmission with other surrounding UEs (including the UE 2) that use same SL timing reference. In other words, when the UE 1 performs SL transmission, the S-SSB is unnecessary to be transmitted, that is, not all UEs 1 is required to be the SyncRefUE.

In a conventional NR SL system, when an SL UE meets a specific condition, the S-SSB is unnecessary to be transmitted. For example, when the SL UE is synchronized with a SyncRefUE or a cell (cell), and an RSRP measurement result is higher than a threshold, the SL UE is unnecessary to transmit the S-SSB. For ease of understanding, with reference to FIG. 3, the following describes a scenario of determining, based on an RSRP measurement result and a threshold, whether to transmit an S-SSB.

The architecture shown in FIG. 3 includes a network device 310 and UEs 321 to 323. The network device 310 may be a gNB or an eNB. Coverage of the network device 310 may be illustrated by a circular boundary line 334. As shown in FIG. 3, a UE 321 and a UE 322 are in coverage of the network device 310, while a UE 323 is out of coverage of the network device 321.

Referring to FIG. 3, within coverage of the network device 310, a boundary line 332 may be determined based on a configured threshold (configured threshold). In an area within the boundary line 332, an RSRP is greater than or equal to the configured threshold. Within an annular region between the boundary line 332 and the boundary line 334, an RSRP is less than the configured threshold.

Since a UE is unnecessary to transmit an S-SSB when an RSRP measurement result is higher than the configured threshold, the UE 321 in the range of the boundary line 332 does not transmit the S-SSB. In contrast, the UE 322 between the boundary line 332 and the boundary line 334 becomes a SyncRefUE, and transmit the S-SSB.

Still referring to FIG. 3, since the UE 322 is a SyncRefUE, coverage of the UE 322 may be illustrated by a circular boundary line 344. Within this coverage, a boundary line 342 may be determined based on a preconfigured threshold (preconfigured threshold). In an area within the boundary line 342, an RSRP is greater than or equal to the pre-configured threshold. In an annular region between the boundary line 342 and the boundary line 344, an RSRP is less than the preconfigured threshold.

As shown in FIG. 3, the UE 323 outside the coverage of the network device 321 will receive S-SSBs from the SyncRefUE (UE 322). Since an RSRP measured by the UE 323 is less than the preconfigured threshold, the UE 323 also becomes a SyncRefUE.

With reference to FIG. 3, the foregoing describes a plurality of scenarios in which the UE 1 does not transmit an S-SSB in conventional design of SL. In these scenarios, if related design of SL is used, a procedure of performing initial beam pairing by using an S-SSB cannot be performed when the UE 1 meeting a condition does not transmit the S-SSB.

In addition, regarding the S-SSB transmitted by the UE 1 serving as a SyncRefUE , similar to an SSB of NR Uu, in conventional NR SL, a plurality of S-SSBs may be transmitted by using different beams, that is, beam sweeping. Unlike the SSB of the NR Uu (when a UE identifies a best beamformed SSB, the UE may indicate the identified SSB/beam (beam) to a network device over an uplink physical random access channel (physical random access channel, PRACH)), the NR SL does not have a PRACH, and a UE serving as a SyncRefUE cannot learn which UE(s) receives S-SSBs transmitted by the UE.

In conclusion, in a SL BWP, transmission of invalid S-SSB(s) not only increases resource consumption, but also seriously affects available resources for another physical SL channel/signal. If a transmission condition of the S-SSB(s) is excessively limited, a UE may fail to perform initial beam pairing before sidelink unicast link establishment, and resource overheads are also increased.

Therefore, for SL BM, how to implement initial beam pairing by using an S-SSB is a technical problem to be solved. In addition, in a scenario in which initial beam pairing is performed based on an S-SSB, transmission of the S-SSB is also a technical problem to be solved when a UE is not a synchronization reference source. Moreover, how the UE 1 that transmits an S-SSB identifies the UE2 that receives the S-SSB and a receiving and transmitting beam pair determined by the UE 2 is also a technical problem to be solved.

To solve some of the foregoing problems, an embodiment of the present application provided a method for a first node used for wireless communication. According to this method, the first node determines, based on an indication of the first information, whether to perform initial beam pairing and/or sidelink unicast link establishment, and further determines whether to transmit a related sidelink-synchronization signal block. In other words, a condition for determining whether to perform initial beam pairing is newly introduced in the present application, to determine whether the sidelink-synchronization signal block is to be transmitted, so that the sidelink-synchronization signal block can ensure effective initial beam pairing while reducing resources.

It should be noted that, the beam mentioned in embodiments of the present application may include or be replaced with at least one of the following: a beam, a physical beam (physical beam), a logical beam (logical beam), a spatial filter (spatial filter), a spatial parameter (spatial parameter), a spatial domain filter (spatial domain filter), a spatial domain transmission filter (spatial domain transmission filter), a spatial domain reception filter (spatial domain reception filter), or an antenna port (antenna port). Meanings of these expressions may be the same, and are not distinguished from each other in embodiments of the present application.

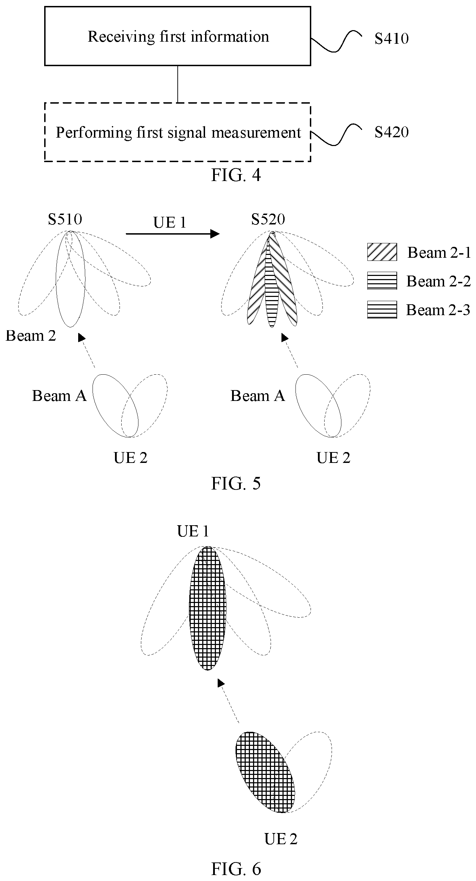

The method embodiments of the present application will be described below in detail with reference to the drawings. FIG. 4 is a schematic flowchart of a method for a first node used for wireless communication according to an embodiment of the present application. A dashed line in FIG. 4 indicates that the procedure is optional.

The method shown in FIG. 4 includes Step S410 and Step S420. Step S420 is an optional procedure. It should be understood that the method illustrated in FIG. 4 may be performed by a first node.

In some implementations, the first node may be any one of the foregoing user equipments for performing sidelink communication. For example, the first node may be a vehicle in V2X, or may be a basic communications facility in V2X. In some implementations, the first node may be within coverage of a network, or may be outside coverage of a network. When the first node is within the coverage of the network, the first node may perform sidelink communication based on a configuration of a network device.

In an embodiment, the first node may be a network-controlled repeater (network-controlled repeater, NCR).

In an embodiment, the first node may be a user equipment, for example, the user equipments 121 to 129 shown in FIG. 1.

In an embodiment, the first node may a relay (relay), such as a relay terminal.

Referring to FIG. 4, in Step S410, first information is received.

The first node may receive the first information in a plurality of manners. In some embodiments, the first node may receive the first information through another node that interacts with the first node. The another node may be a network device, or may be a user equipment different from the first node. In some embodiments, the first node may receive the first information through a higher layer of the first node.

In some embodiments, a transmitter of the first information may be a communications device that interacts with the first node. For example, the transmitter of the first information is a network device that provides a service for the first node. The network device may also be referred to as a second node. For example, the second node transmits the first information to the first node. For example, the transmitter of the first information may be another network sidelink device different from the second node.

In an embodiment, the transmitter of the first information is a base station. The base station may provide a communications service for an area in which the first node is located.

In some embodiments, the transmitter of the first information may be a higher layer corresponding to the first node. The higher layer may transmit the first information to a lower layer or a bottom layer of the first node. For example, the first information may be delivered layer by layer to a physical layer from a radio resource control (radio resource control, RRC) layer corresponding to the first node. For another example, the first information may be delivered to a physical layer from a medium access control (media access control, MAC) layer corresponding to the first node.

In an embodiment, the transmitter of the first information is a higher layer of the first node. For example, the first information is received from a higher layer of the first node, and the first information is used to indicate whether initial beam pairing based on an S-SSB is to be performed.

In an embodiment, the higher layer of the first node includes at least one of an RRC layer or a MAC layer.

The first node may determine, based on the first information, whether to perform a first operation. In other words, the first information is used to determine whether the first operation is to be performed.

In an embodiment, the first information is used to determine that the first operation is to be performed.

In an embodiment, the first information is used to determine that the first operation is not to be performed.

The first operation includes at least one of initial beam pairing, sidelink unicast link establishment, or sidelink beam management. In some embodiments, the first operation is at least one of initial beam pairing, sidelink unicast link establishment, or sidelink beam management.

The initial beam pairing is a process that the first node and a third node pair a transmit beam and a receive beam. The third node may be a user equipment or a relay different from the first node.

In an embodiment, the initial beam pairing is sidelink initial beam pairing.

In some embodiments, a procedure of the initial beam pairing may be as a pairing process in another communications system (such as NR), or may be a related procedure improved according to a feature of a sidelink communications system.

In an embodiment, the procedure of the initial beam pairing includes two processes: beam coarse pairing and beam fine pairing.

For ease of understanding, the following exemplarily describes the procedure of the initial beam pairing including coarse pairing and fine pairing with reference to FIG. 5. As shown in FIG. 5, initial beam pairing is performed on a sidelink receive beam of a UE 1 and a sidelink transmit beam of a UE 2.

Referring to FIG. 5, in Step S510, coarse pairing is completed between a transmit beam A of the UE 2 and a receive beam 2 of the UE 1.

In Step S520, the UE 1 receives, by using narrower beams 2-1, 2-2, and 2-3, signals transmitted by the beam A, and performs measurement to implement fine pairing. The UE 1 configures three narrow beams at the beam 2, and the UE 2 transmits signals for a plurality of times.

Then, based on a measurement result, the UE 1 selects a narrow beam as the receive beam for the transmit beam A of the UE 2.

In an embodiment, the procedure of the initial beam pairing includes beam coarse pairing.

For ease of understanding, the following exemplarily describes the procedure of the initial beam pairing including coarse pairing with reference to FIG. 6. As shown in FIG. 6, initial beam pairing is performed on a sidelink transmit beam of a UE 1 and a sidelink receive beam of a UE 2. Referring to FIG. 6, the UE 1 transmits four beams in a beam sweeping manner. The UE 2 measures the four transmit beams of the UE 1 by using two receive beams. The UE 2 determines, based on a measurement result, a transmit beam of the UE 1 and a receive beam of the UE 2 that are paired, and notifies the UE 1.

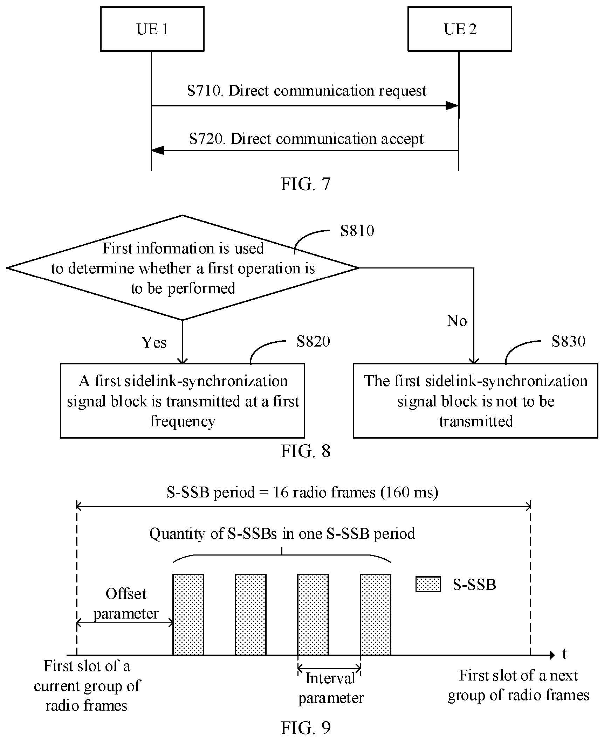

The sidelink unicast link establishment is a process for establishing a sidelink unicast link between a first node and a third node. The third node is a user equipment or a relay with which the first node expects to have sidelink communication. For ease of understanding, the following uses a UE 1 and a UE 2 in FIG. 7 as examples to describe a process of an implementation of sidelink unicast link establishment.

Referring to FIG. 7, in Step S710, the UE 1 transmits a direct communication request (direct communication request, DCR) to a UE 2. The UE 1 requests, by transmitting the DCR, the UE 2 to establish a sidelink unicast link.

In Step S720, the UE 2 feeds back direct communication accept (direct communication accept) to the UE 1. According to the feedback from the UE 2, the UE 1 and the UE 2 complete a process of sidelink unicast link establishment.

In some embodiments, the process of the sidelink unicast link establishment may include initial beam pairing. For example, when initial beam pairing is performed before a unicast link is established, the process of the sidelink unicast link establishment may be considered as including performing initial beam pairing.

As mentioned above, sidelink beam management includes processes such as initial beam pairing, beam maintenance, and beam failure recovery. A plurality of processes in sidelink beam management may ensure that a first node implements stable sidelink communication in a relatively large link range. For the processes such as beam maintenance and beam failure recovery, reference may be made to an implementation process in another communications system (for example, NR), or a related procedure may be improved according to a feature of a sidelink communications system.

In some embodiments, the first operation may be performing initial beam pairing of sidelink communication. For example, the first operation may be initial beam pairing performed before sidelink unicast link establishment. In some embodiments, the first operation may be sidelink unicast link establishment. For example, the sidelink unicast link establishment may include a process of initial beam pairing. For another example, because a user equipment located in the center of a cell is in better coverage of a base station, the user equipment may establish a sidelink unicast link without performing initial beam pairing. In some embodiments, the first operation may be initial beam pairing and sidelink unicast link establishment.

The first information may indicate, in a plurality of manners such as a direct indication or an implicit indication, whether the first operation is to be performed.

In some embodiments, the first information is used to directly indicate whether the first operation is to be performed. For example, the first information may be directly indicated by using information of "yes" or "no".

In an embodiment, the first information is used to indicate whether the first node performs initial beam pairing. For example, the first information may directly instruct the first node to perform initial beam pairing before sidelink unicast link establishment. For another example, the first information may directly instruct the first node not to perform initial beam pairing before sidelink unicast link establishment.

In an embodiment, the first information is used to indicate whether the first node performs sidelink unicast link establishment. For example, the first information may directly instruct the first node to perform sidelink unicast link establishment. For another example, the first information may directly instruct the first node not to perform sidelink unicast link establishment.

In some embodiments, the first information may be implicitly indicated by included information content. For example, the first information includes a first frequency, and the first frequency may be used to perform the first operation, or may not be used to perform the first operation. When the first frequency is used for performing the first operation, the first node may perform the first operation based on this part of information. When the first frequency is not used for performing the first operation, the first node does not perform the first operation.

In an embodiment, the first frequency is used for performing initial beam pairing by the first node. For example, when receiving first information including the first frequency, the first node performs initial beam pairing; when receiving first information that does not include the first frequency, the first node does not perform initial beam pairing.

In an embodiment, the first frequency is not used for performing initial beam pairing by the first node. For example, when a frequency in the first information received by the first node includes only the first frequency, the first node does not perform initial beam pairing.

In an embodiment, the first frequency is used for performing sidelink unicast link establishment by the first node. For example, when receiving first information including the first frequency, the first node performs sidelink unicast link establishment; when receiving first information that does not include the first frequency, the first node does not perform sidelink unicast link establishment.

In an embodiment, the first frequency is not used for performing sidelink unicast link establishment by the first node. For example, when a frequency in the first information received by the first node includes only the first frequency, the first node does not perform sidelink unicast link establishment.

In an embodiment, the initial beam pairing is performed at the first frequency. The initial beam pairing being performed at the first frequency means that the first frequency is used for the initial beam pairing.

In an embodiment, the sidelink unicast link establishment is performed at the first frequency. The sidelink unicast link establishment being performed at the first frequency means that the first frequency is used for the sidelink unicast link establishment.

In some embodiments, the first information may include various information or signalling according to the transmission manners. For example, when a transmitter of the first information is a higher layer, the first information may include signalling or a parameter indicated by the higher layer.

In an embodiment, the first information includes higher layer information. The higher layer information may be information about the first operation delivered by higher layers relative to a physical layer. For example, the first information may be RRC signalling, or the first information may be carried in RRC signalling.

In an embodiment, the first information includes RRC layer signalling.

In an embodiment, the first information includes an RRC information element (information element, IE). For example, the first information may be carried in the RRC IE. For another example, the first information may include initial beam pairing indication signalling newly configured at an RRC layer.

The first information is further used by the first node to determine whether a first sidelink-synchronization signal block related to the first operation is to be transmitted.

In some embodiments, a sidelink-synchronization signal block may be represented as an S-SSB (sidelink-synchronization signal block). In some embodiments, the sidelink-synchronization signal block may also be represented as an S-SS/PBCH block, which is not limited in embodiments of the present application. It should be noted that, in this specification, the sidelink-synchronization signal block being represented as an S-SSB is used as an example for description. Certainly, the S-SSB in this specification may be replaced with the S-SS/PBCH block. For brevity, a first S-SSB is used to represent a first sidelink-synchronization signal block below.

In some embodiments, whether the first operation is to be performed may be a condition for the first node to transmit the first S-SSB.

In an embodiment, the first information is used to determine that the first operation is to be performed, and then the first S-SSB is to be transmitted.

In an embodiment, the first information is used to determine that the first operation is not to be performed, and then the first S-SSB is not to be transmitted.

The first S-SSB related to the first operation may be replaced with that the first operation is performed or some operations in the first operation are performed based on the first S-SSB, or the first S-SSB is used to perform the first operation or some operations in the first operation. In other words, the first S-SSB is transmitted by the first node for the purpose of execution of the first operation or some operations in the first operation. For example, when the first operation is initial beam pairing, the first S-SSB may be used to perform the initial beam pairing.

In an embodiment, the first sidelink-synchronization signal block is used for the first operation.

In an embodiment, the first sidelink-synchronization signal block is used for the first operation, and the first sidelink-synchronization signal block is used for sidelink communication or sidelink discovery.

In an embodiment, the first sidelink-synchronization signal block is used for the first operation, and the first sidelink-synchronization signal block is used for synchronization or selection of a synchronization reference.

In an embodiment, the first sidelink-synchronization signal block is used for the first operation, and the first sidelink-synchronization signal block is used for sidelink communication or sidelink discovery and for synchronization or selection of a synchronization reference.

In an embodiment, the initial beam pairing is based on the first S-SSB.

In an embodiment, the first S-SSB is used for the initial beam pairing.

In an embodiment, the sidelink unicast link establishment is based on the first S-SSB.

In an embodiment, the first S-SSB is used for the sidelink unicast link establishment.

The first S-SSB may follow an existing structural design, or may use an updated format of an original S-SSB. In some embodiments, the first S-SSB may include an S-PSS, an S-SSS, and a PSBCH, or may include only a part of content in an S-PSS, an S-SSS, and a PSBCH, or may include information for identification performed by a third node that is used to receive the first S-SSB. The first S-SSB carrying identification information is beneficial for the third node to receive the first S-SSB based on the information and identify a node transmitting the first S-SSB. For example, the identification information carried in the first S-SSB may include an identifier (a source identifier) and/or a destination identifier of the first node, or include a source identifier and/or a destination identifier at layer 1 (layer 1, L1), so that a receiving node can effectively identify a destination and beam determination information.

In an embodiment, the first S-SSB used for the first operation uses a format of a current S-SSB.

In an embodiment, the first S-SSB for the first operation uses an update format of a current S-SSB.

In an embodiment, the first S-SSB includes at least one of an S-PSS, an S-SSS, or a PSBCH. For example, the first S-SSB may include only an S-PSS and an S-SSS. For another example, the first S-SSB may include only an S-PSS and a PSBCH.

In an embodiment, the first S-SSB carries an identifier of the first node. By carrying the identifier of the first node in the first S-SSB, a node detecting the first S-SSB can effectively identify a transmit node.

In an embodiment, the first S-SSB carries at least one of a source identifier, a destination identifier, an L1 source identifier, or an L1 destination identifier. By carrying at least one of the source identifier or the destination identifier in the first S-SSB, a node detecting the first S-SSB can effectively identify a transmit node and/or determine whether the node belongs to a target node of the first S-SSB.

In an embodiment, the initial beam pairing is performed between the first node and a target node. When the third node that receives the first S-SSB is the target node, initial beam pairing may be performed between the third node and the first node.

In an embodiment, the sidelink unicast link establishment is performed between the first node and the target node. When the third node that receives the first S-SSB is the target node, a sidelink unicast link may be established with the first node.

In some embodiments, the first node may determine whether to transmit the first S-SSB according to an indication about the first operation in the first information. For example, the first information indicates that the first operation is to be performed, and the first node transmits a first S-SSB related to the first operation. For another example, when a first frequency included in the first information is used for the first operation, the first node transmits the first S-SSB. For another example, when the first information indicates that the first operation is to be performed, the first information may be used to determine a first threshold, and the first node may determine, based on a relationship between a signal measurement result and the first threshold, whether to transmit the first S-SSB, which is described later with reference to Step S420.

In some embodiments, a frequency at which the first node transmits the first S-SSB being related to the first operation means that the first node may transmit the first S-SSB at a frequency at which the first operation is performed.

In some embodiments, the first operation indicated by the first information being related to the first frequency means that a transmission frequency of the first S-SSB is the first frequency, or that a transmission frequency of the first S-SSB is determined based on the first frequency.

In an embodiment, when the first information indicates that the first operation is to be performed, and the first operation is related to the first frequency, the first node transmits the first S-SSB at the first frequency.

In an embodiment, when the first information indicates that the first operation is not to be performed, the first node skips transmission of the first S-SSB.

In an embodiment, when the first information indicates that the first operation is not to be performed, and the first operation is related to the first frequency, the first node skips transmission of the first S-SSB at the first frequency.

In an embodiment, the first information includes a first frequency, the first frequency is used for the first operation, and the first node transmits the first S-SSB at the first frequency.

In an embodiment, the first frequency is used for the first operation, and the first frequency is used for sidelink communication or sidelink discovery.

In an embodiment, the first frequency is used for the first operation, and the first frequency is used for synchronization or selection of synchronization reference.

In an embodiment, the first frequency is used for the first operation, and the first frequency is used for sidelink communication or sidelink discovery and used for synchronization or selection of synchronization reference.

In an embodiment, the first information includes a first frequency, the first frequency is not used for the first operation, and the first node skips transmission of the first S-SSB, or the first node skips transmission of the first S-SSB at the first frequency.

In some embodiments, the third node performs reception of the first S-SSB at the first frequency.

In an embodiment, the third node may perform the first operation according to a receiving status of the first S-SSB. For example, when the first S-SSB is received by the third node, and the third node is a target node, initial beam pairing or sidelink unicast link establishment is performed. For another example, when the first S-SSB is not received by the third node, or the third node is not a target node of the first S-SSB, related initial beam pairing or sidelink unicast link establishment is not performed.

For ease of understanding, the following exemplarily describes, with reference to FIG. 8, a possible implementation in which first information is used to determine whether a first S-SSB is to be transmitted. The method shown in FIG. 8 is performed by a first node.

Referring to FIG. 8, in Step S810, it is determined whether the first information is used to determine that a first operation is to be performed. The first information may be related to a first frequency. If it is determined from the first information that the first operation is to be performed, Step S820 is performed. If it is determined from the first information that the first operation is not to be performed, Step S830 is performed.

In Step S820, the first S-SSB is transmitted at the first frequency.

In Step S830, the first S-SSB is not to be transmitted.

In some embodiments, whether the first S-SSB is to be transmitted is further determined based on a result of signal measurement performed by the first node, or determined based on the first information and a signal measurement result. A detailed description is made below with reference to Step S420.

In an embodiment, the first information and the result of the first signal measurement are jointly used to determine a transmit parameter of the first sidelink-synchronization signal block. The first information is further used to determine the transmit parameter of the first S-SSB. For example, the transmit parameter of the first S-SSB may include time allocation (time allocation) of the first S-SSB, and/or a transmission quantity corresponding to the first S-SSB, and/or a transmission period (period) corresponding to the first S-SSB. Therefore, the transmit parameter of the first S-SSB may be a set of transmit parameters. The set of transmit parameters may include one or more of the transmit parameters described above.

In some embodiments, the transmission quantity corresponding to the first S-SSB means a transmission quantity determined based on a configuration of the first S-SSB. For example, the transmission quantity corresponding to the first S-SSB may be a quantity of the first S-SSBs, or may be a quantity of transmissions of the first S-SSB. For example, the transmission quantity of the first S-SSBs may be determined based on higher layer configuration.

For example, the first S-SSB may refer to one S-SSB transmitted by the first node transmit, or may refer to a group of S-SSBs. When the first S-SSB is a S-SSB group that includes a plurality of S-SSBs, each S-SSB in the first S-SSB may be referred to as a sidelink synchronization signal sub-block.

In an embodiment, the first S-SSB includes one or more sidelink synchronization signal sub-blocks.

In some embodiments, one or more sidelink synchronization signal sub-blocks included in the first S-SSB refer to one or more S-SSBs in one transmission period. For example, in one transmission period, if a plurality of S-SSBs are transmitted at a specific interval, the sidelink synchronization signal sub-block may be one of the plurality of S-SSBs, or may be the plurality of S-SSBs.

In an embodiment, the one or more sidelink synchronization signal sub-blocks included in the first S-SSB are in a transmission period corresponding to the first S-SSB.

In some embodiments, the transmission quantity of the first S-SSB means a transmission quantity of the first S-SSB in one transmission period. For example, when one sidelink synchronization signal sub-block is transmitted in one period, the transmission quantity of the first S-SSB is 1. For example, when N (N is greater than 1) sidelink synchronization signal sub-blocks are transmitted in one period, the transmission quantity of the first S-SSB is N. When the first operation is the initial beam pairing, N sidelink synchronization signal sub-blocks may correspond to N beam indexes.

In an embodiment, the transmission quantity corresponding to the first S-SSB is a quantity of one or more sidelink synchronization signal sub-blocks in the first S-SSB.

In an embodiment, the transmission quantity corresponding to the first S-SSB is equal to 1.

In an embodiment, the transmission quantity corresponding to the first S-SSB is greater than 1.

In an embodiment, the transmission quantity corresponding to the first S-SSB in one period may be any one of 1, 2, 4, 8, 16, 32, or 64.

In some embodiments, the transmission period corresponding to the first S-SSB may follow an existing design of NR SL, or may be designed according to an execution requirement of the first operation. For example, the transmission period corresponding to the first S-SSB may be redesigned according to a meaning of a transmission quantity. For another example, when the transmission period of the first S-SSB is determined according to a requirement of initial beam pairing and/or a requirement of sidelink unicast link establishment, the design for the transmission period of the first S-SSB is required to facilitate indication by using higher layer signalling.

For example, the transmission period corresponding to the first SSB may be indicated by using a specified time unit. The specified time unit may be a slot, a symbol, or the like, which is not limited herein.

In an embodiment, the transmission period corresponding to the first S-SSB includes a positive integer quantity of slots.

For example, the transmission period corresponding to the first S-SSB may be represented by using a specified time length. For the specified time length, one time period may be represented by using M time units. The time unit may be milliseconds.

In an embodiment, the transmission period corresponding to the first S-SSB includes a positive integer quantity of milliseconds (ms).

In an embodiment, the transmission period corresponding to the first S-SSB is equal to 160 ms.

For example, the transmission period corresponding to the first S-SSB may be specified T time units or T time lengths. The T may be a fixed value, or may be a variable that changes according to a specific rule.

In an embodiment, the transmission period corresponding to the first S-SSB is a constant.

In an embodiment, the transmission period corresponding to the first S-SSB is variable.

In some embodiments, the time allocation of the first S-SSB may be determined according to a time-frequency resource used by the first node to transmit the first S-SSB, and/or a transmit requirement of the first S-SSB. The time allocation of the first S-SSB may be further determined based on a time offset and a time interval. For example, when the first S-SSB includes a plurality of sidelink synchronization signal sub-blocks, the time allocation of the first S-SSB may be determined based on a quantity of the plurality of sidelink synchronization signal sub-blocks.

In an embodiment, the time allocation of the first S-SSB is related to a time offset between a slot in which a first sidelink synchronization signal sub-block in the first S-SSB is located and a start of a period corresponding to the first S-SSB. The period corresponding to the first S-SSB is a time period that the first node transmits the first S-SSB. In a case in which the first S-SSB includes a plurality of sidelink synchronization signal sub-blocks, a start time of the period and a configured time offset may be used to determine a transmitting time of the first sidelink synchronization signal sub-block.

As an embodiment, a value of the time offset may be any one of 0 to 1279.

In an embodiment, the time allocation of the first S-SSB is related to an interval between slots in which any two sidelink synchronization signal sub-blocks in the first S-SSB are located. An interval between any two sidelink synchronization signal sub-blocks may be determined based on a configured time interval. For example, for two adjacent sidelink synchronization signal sub-blocks, an interval between the two is the configured time interval.

In an embodiment, a value of time interval may be any one of 0 to 639.

For example, the time allocation of the first S-SSB may include a plurality of pieces of information, which facilitates determination of a transmitting time of the first S-SSB and a transmitting time of a plurality of sidelink synchronization signal sub-blocks included in the first S-SSB.

In an embodiment, the time allocation of the first S-SSB includes a time offset between a slot in which a first sidelink synchronization signal sub-block in the first S-SSB is located and a start of a period corresponding to the first S-SSB.

In an embodiment, the time allocation of the first S-SSB includes an interval between slots in which any two sidelink synchronization signal sub-blocks in the first S-SSB are located.

In some embodiments, the plurality of transmit parameters of the first S-SSB described above are interrelated. For example, the transmission period corresponding to the first S-SSB may be related to the transmission quantity corresponding to the first S-SSB. For another example, the time allocation of the first S-SSB may be related to the transmission period and the transmit quantity corresponding to the first S-SSB.

In an embodiment, the time allocation of the first S-SSB includes the transmission period corresponding to the first S-SSB.

For ease of understanding, the following uses a schematic diagram of a transmit parameter of an S-SSB shown in FIG. 9 as an example for description. In FIG. 9, a transmission period corresponding to a first S-SSB is an S-SSB period, that is, 16 radio frames. When 16 radio frames are used as one group, a start of each period is a first slot of a current group of radio frames, and an end of the period is a first slot of a next group of radio frames.

In the example of FIG. 9, there are four S-SSBs in one period, and each S-SSB may be referred to as a sidelink synchronization signal sub-block. As shown in FIG. 9, the transmission quantity of the first S-SSB is a quantity of sidelink synchronization signal sub-blocks, and therefore, the transmission quantity is 4. The transmission quantity of the first S-SSB may alternatively be any parameter in 1, 2, 8, 16, 32, 64, or the like.

Still referring to FIG. 9, a slot in which a first sidelink synchronization signal sub-block is located is determined based on a start of a period and an offset parameter (offset parameter). The offset parameter is the time offset described above. The time offset may be any number between 0 and 1279.

A slot in which another sidelink synchronization signal sub-block is located is determined based on an interval parameter (interval parameter) between two adjacent sidelink synchronization signal blocks. The interval parameter is the time interval described above. An interval between any two sidelink synchronization signal sub-blocks is an integer multiple of the time interval. The time interval may be any number between 0 and 639.

Time allocation of the first S-SSB is related to the start of a period, the offset parameter, and the interval parameter in FIG. 9.

In some embodiments, first information may directly indicate a transmit parameter of the first S-SSB. In other words, the first node may directly determine the transmit parameter of the first S-SSB based on received first information. For example, if the first information indicates a transmission quantity of S-SSB(s) in one period and/or a transmission period of an S-SSB, the first node transmits the S-SSB(s) based on the indication of the first information.

In some embodiments, the transmit parameter of the first S-SSB may be alternatively determined based on a result of signal measurement performed by the first node, or determined based on the first information and a signal measurement result. The following is described with reference to Step S420.

Still referring to FIG. 4, in Step S420, first signal measurement is performed.

The first signal measurement may be measurement performed by the first node on reference signals from different communications devices and/or service areas. The communications device is, for example, a synchronization reference node that serves as a synchronization reference source. The service area is, for example, a cell (cell).

In an embodiment, the first signal measurement includes signal measurement for a synchronization reference node or a cell in which the first node is located.

In an embodiment, the first signal measurement includes signal measurement for a synchronization reference node.

In an embodiment, the synchronization reference node includes the SyncRefUE.

In an embodiment, the first signal measurement includes signal measurement for a cell.

A result of the first signal measurement may be represented by one or more parameters indicating reference signal quality. For example, the result of the first signal measurement may be RSRP, reference signal received quality (reference signal received quality, RSRQ), or reference signal strength indicator (reference signal strength indicator, RSSI), which is not limited herein.

In some embodiments, the result of the first signal measurement is used to determine whether to transmit the first S-SSB. For example, a size relationship between the result of the first signal measurement and a first threshold is used to determine whether to transmit a first S-SSB. For example, whether to transmit the first S-SSB is determined depending on whether the result of the first signal measurement is less than the first threshold. For example, the result of the first signal measurement is combined with the first information to determine whether to transmit the first S-SSB.

In an embodiment, when the result of the first signal measurement is less than the first threshold, the first S-SSB is to be transmitted.

In an embodiment, when the result of first signal measurement is equal to or greater than the first threshold, the first S-SSB is not to be transmitted.

In an embodiment, the first threshold is used by the first node to determine whether to perform a first operation.

The first threshold may be configured or preconfigured, or may be indicated by the first information, or may be dynamically adjusted according to an actual situation. For example, the first threshold may be configured by using higher layer signalling of the first node. For example, the first threshold may be determined based on the first information received by the first node.

In some embodiments, the first information may be used to determine the first threshold in a plurality of manners. For example, the first information may include the first threshold. For example, the first information may be used by the first node to select the first threshold from a plurality of candidate thresholds. For example, the first information may include a first threshold offset used to determine the first threshold, so that the first node determines the first threshold based on a first reference threshold and the first threshold offset.

In an implementation, the first threshold is one of a plurality of candidate thresholds, and the first information is used to determine the first threshold from the plurality of candidate thresholds. For example, in a case that the plurality of candidate thresholds include a target threshold, when the first information indicates that the first operation is to be performed or a first frequency is used for the first operation, the first threshold is equal to the target threshold; when the first information indicates that the first operation is not to be performed or the first frequency is not used for the first operation, the first threshold is a candidate threshold, different from the target threshold, in the plurality of candidate thresholds.

In an embodiment, the plurality of candidate thresholds are configured by using higher layer signalling. For example, the plurality of candidate thresholds may be configured by using RRC signalling of the first node.

For example, the plurality of candidate thresholds may include a plurality of thresholds and the first threshold for performing sidelink communication or sidelink discovery, so that the first node better performs sidelink communication or sidelink discovery, initial beam pairing, and sidelink unicast link establishment. The first threshold may also be referred to as a target threshold.

In an embodiment, the plurality of candidate thresholds include syncTxThreshIC and the target threshold. For example, the plurality of thresholds configured by using the RRC signalling of the first node include the first threshold for determining whether to transmit the first S-SSB.

In an embodiment, the plurality of candidate thresholds include syncTxThreshIC, syncTxThreshOoC, and the target threshold. The syncTxThreshIC and syncTxThreshOoC may be configured as existing configuration parameters for performing sidelink communication or sidelink discovery, or may be configured with new parameters.

In an embodiment, for the syncTxThreshIC, reference may be made to section 6.3.5 of 3GPP TS38.331.

In an embodiment, for the syncTxThreshOoC, reference may be made to section 6.3.5 of 3GPP TS38.331.

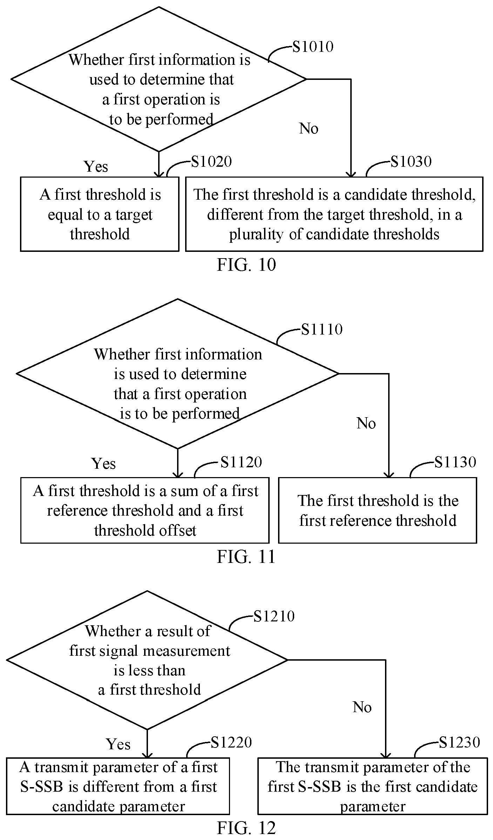

For ease of understanding, the following exemplarily describes, with reference to FIG. 10, a possible implementation in which first information is used to determine a first threshold. The method shown in FIG. 10 is also performed by the first node.

Referring to FIG. 10, Step S1010 is the same as Step S810, and details are not described herein again. If a result of Step S 1010 is yes, Step S1020 is performed. If a result of Step S1010 is no, Step S1030 is performed.

In Step S1020, the first threshold is equal to the target threshold.

In Step S1030, the first threshold is a candidate threshold, different from the target threshold, in the plurality of candidate thresholds.

In an implementation, the first threshold may be determined based on the first reference threshold and/or the first threshold offset. For example, when the first information is used to determine that the first operation is to be performed, the first threshold is a sum of a first reference threshold and a first threshold offset, and the first threshold offset is not 0. When the first information is used to determine that the first operation is not to be performed, the first threshold is the first reference threshold.

In an embodiment, the first reference threshold is a reference threshold indicated by the first information.

In an embodiment, the first reference threshold is syncTxThreshIC or syncTxThreshOoC.

In an embodiment, the first threshold offset is configured by using higher layer signalling.

In an embodiment, the first threshold offset is less than 0.

In an embodiment, the first threshold offset is greater than 0. That is, the first threshold is higher than the first reference threshold. If a result of first signal measurement performed by the first node is less than the first threshold, a first S-SSB is transmitted. FIG. 3 is used as an example. If the first threshold is greater than the first reference threshold, it means that the boundary line 332 moves inward. In other words, an area between the boundary line 332 and the boundary line 334 becomes larger, and more user equipments meet a condition of transmitting the first S-SSB.

In an embodiment, the first threshold offset is a negative integer.

In an embodiment, the first threshold offset is a positive integer.

In an embodiment, the first threshold offset is in the unit of dB.

For ease of understanding, the following exemplarily describes, with reference to FIG. 11, another possible implementation in which first information is used to determine a first threshold. The method shown in FIG. 11 is also performed by the first node.

Referring to FIG. 11, Step S1110 is the same as Step S810, and details are not described herein again. If a result of Step S1110 is yes, Step S1120 is performed. If a result of Step S1110 is no, Step S1130 is performed.

In Step S1120, the first threshold is a sum of a first reference threshold and a first threshold offset.

In Step S1130, the first threshold is the first reference threshold.

In some embodiments, a result of first signal measurement is used to determine a transmit parameter of a first S-SSB. For example, the first node may measure an RSRP from a synchronization reference node or a cell, and a measured RSRP value is used to determine the transmit parameter of the first S-SSB. It should be understood that, in a case in which no conflict occurs, the first information and the result of the first signal measurement may be used together to determine the transmit parameter of the first S-SSB. In other words, at least one of the first information and the result of the first signal measurement is used to determine the transmit parameter of the first S-SSB.

In an embodiment, the first information and the result of the first signal measurement are jointly used to determine the transmit parameter of the first sidelink-synchronization signal block.

In an embodiment, the transmit parameter of the first S-SSB includes the first threshold, and whether to transmit the first S-SSB is determined depending on whether the result of the first signal measurement is less than the first threshold.

In an embodiment, the transmit parameter of the first S-SSB includes the one or more parameters described above.

In an implementation, the transmit parameter of the first S-SSB is one of a plurality of sets of candidate parameters, and the result of the first signal measurement is used to determine the transmit parameter of the first S-SSB from the plurality of sets of candidate parameters.

In an embodiment, the plurality of sets of candidate parameters are configured by using higher layer signalling. For example, the plurality of sets of candidate parameters may be configured by using RRC signalling of the first node.

In an embodiment, the first information and the result of the first signal measurement are jointly used to determine the transmit parameter of the first sidelink-synchronization signal block from the plurality of sets of candidate parameters.

In an embodiment, each set of candidate parameters in the plurality of sets of candidate parameters includes a period corresponding to and related to transmission of a sidelink-synchronization signal block, a transmission quantity corresponding to the sidelink-synchronization signal block in one period, time allocation of the sidelink-synchronization signal block, a time offset, and a time interval.

In an embodiment, the sidelink-synchronization signal block includes a plurality of sidelink-synchronization signal blocks that may be transmitted. The first S-SSB is any one of the sidelink-synchronization signal blocks.

In an embodiment, related configuration parameters for performing sidelink communication or sidelink discovery may be reused as the plurality of sets of candidate parameters, or new parameters may be configured, or the plurality of sets of candidate parameters may include a related configuration parameter and a new target parameter.

In some embodiments, the transmit parameter of the first S-SSB is determined based on the result of the first signal measurement and the first threshold.

In an embodiment, the transmit parameter of the first S-SSB is determined depending on whether the result of the first signal measurement is less than the first threshold. For example, when the result of the first signal measurement is less than the first threshold, the transmit parameter of the first S-SSB is determined based on a first candidate parameter, and at least one parameter in the transmit parameter of the first S-SSB is different from the first candidate parameter; when the result of the first signal measurement is not less than the first threshold, the transmit parameter of the first S-SSB is determined as the first candidate parameter.

In an embodiment, the first candidate parameter is any one set of candidate parameters in the plurality of sets of candidate parameters.

In an embodiment, part of parameters in the transmit parameter of the first S-SSB is the same as that in the first candidate parameter.

In an embodiment, the part of parameters in the transmit parameter that is the same as that of the first candidate parameter is a transmission period or time allocation.

In an embodiment, part of parameters in the transmit parameter of the first S-SSB are determined based on the first candidate parameter and a parameter offset value.

In an embodiment, the parameter offset value is configured by a higher layer.

In an embodiment, the parameter offset value is determined based on the result of the first signal measurement.

In an embodiment, the transmission period corresponding to the first S-SSB is determined based on a transmission period in the first candidate parameter and a period offset value.

In an embodiment, the transmission quantity corresponding to the first S-SSB is determined based on a transmission quantity in the first candidate parameter.

In an embodiment, the time allocation of the first S-SSB is determined based on time allocation in the first candidate parameter.

For ease of understanding, the following exemplarily describes, with reference to FIG. 12, a possible implementation in which a result of first signal measurement is used to determine a transmit parameter of a first S-SSB. The method shown in FIG. 12 is also performed by the first node.

Referring to FIG. 12, in Step S1210, it is determined whether the result of the first signal measurement is less than the first threshold. If a result of Step S1210 is yes, Step S1220 is performed. If a result of Step S1210 is no, Step S1230 is performed.

In Step S1220, the transmit parameter of the first S-SSB is different from the first candidate parameter.

In Step S1230, the transmit parameter of the first S-SSB is a first reference threshold.

In some embodiments, the transmit parameter of the first S-SSB is determined based on a result of first signal measurement and/or first information. In an implementation, the result of the first signal measurement is used to determine a plurality of sets of candidate parameters, and the first information is used to select a target parameter from the plurality of sets of candidate parameters.

In an implementation, the result of the first signal measurement is used to select the target parameter from the plurality of sets of candidate parameters. The target parameter is used to determine the transmit parameter of the first S-SSB based on the first information.

For example, in a case in which the plurality of candidate parameters include the target parameter, when the first information is used to determine that the first operation is to be performed, the transmit parameter of the first S-SSB is set to the target parameter; when the first information is used to determine that the first operation is not to be performed, the transmit parameter of the first S-SSB is set to a set of candidate parameters, different from the target parameter, in the plurality of sets of candidate parameters.

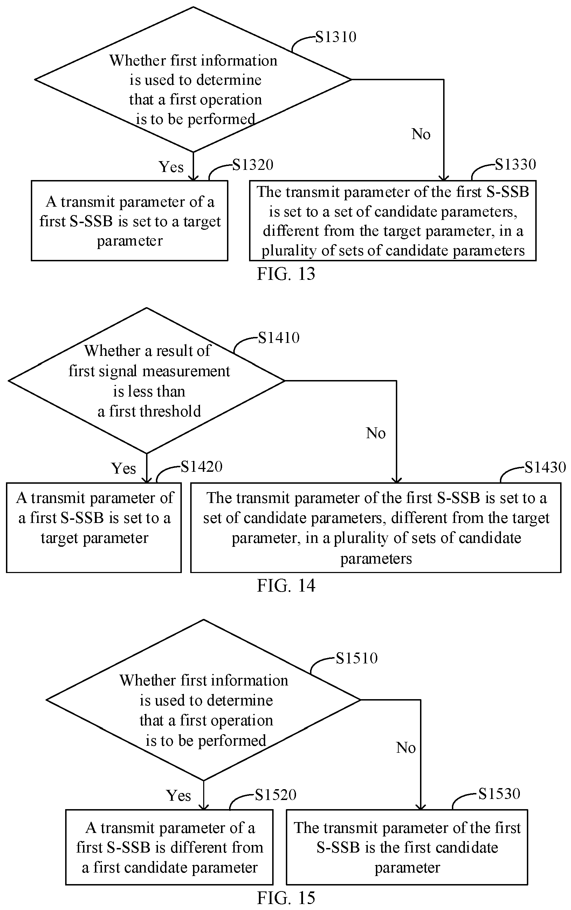

For ease of understanding, the following exemplarily describes, with reference to FIG. 13, a possible implementation in which first information is used to determine a transmit parameter of a first S-SSB. The method shown in FIG. 13 is also performed by the first node.

Referring to FIG. 13, Step S1310 is the same as Step S810, and details are not described herein again. If a result of Step S1310 is yes, Step S1320 is performed. If a result of Step S1310 is no, Step S1330 is performed.

In Step S1320, the transmit parameter of the first S-SSB is set to a target parameter.

In step S1330, the transmit parameter of the first S-SSB is set to a set of candidate parameters, different from the target parameter, in a plurality of sets of candidate parameters.

In an implementation, the first information is used to determine the plurality of sets of candidate parameters, and the result of the first signal measurement is used to select the target parameter from the plurality of sets of candidate parameters.

In an implementation, the first information is used to select a target parameter from a plurality of sets of candidate parameters, and the target parameter is used to determine the transmit parameter of the first S-SSB according to a result of first signal measurement.

For example, in a case in which the plurality of candidate parameters include the target parameter, when the result of the first signal measurement is less than the first threshold, the transmit parameter of the first S-SSB is set to the target parameter; when the result of the first signal measurement is not less than the first threshold, the transmit parameter of the first S-SSB is set to a set of candidate parameters, different from the target parameter, in the plurality of sets of candidate parameters.

For ease of understanding, the following exemplarily describes, with reference to FIG. 14, another possible implementation in which a result of first signal measurement is used to determine a transmit parameter of a first S-SSB. The method shown in FIG. 14 is also performed by the first node.

Referring to FIG. 14, Step S1410 is the same as Step S1210, and details are not described herein again. If a result of Step S1410 is yes, Step S1420 is performed. If a result of Step S1410 is no, Step S1430 is performed.

In Step S1420, the transmit parameter of the first S-SSB is set to a target parameter.

In Step S1430, the transmit parameter of the first S-SSB is set to a set of candidate parameters, different from the target parameter, in a plurality of sets of candidate parameters.

In an implementation, a result of first signal measurement is used to determine the first candidate parameter. The first candidate parameter is used to determine the transmit parameter of the first S-SSB based on the first information.

In an embodiment, the first candidate parameter is selected from the plurality of sets of candidate parameters based on the result of the first signal measurement.

In an implementation, the transmit parameter of the first S-SSB may be determined based on the first candidate parameter.

For example, when the first information is used to determine that the first operation is to be performed, the transmit parameter of the first S-SSB is determined based on the first candidate parameter, and at least one parameter in the transmit parameter of the first S-SSB is different from the first candidate parameter. When the first information is used to determine that the first operation is not to be performed, the transmit parameter of the first S-SSB is determined as the first candidate parameter. The first candidate parameter is as described above, and details are not described herein again.

For ease of understanding, the following exemplarily describes, with reference to FIG. 15, another possible implementation in which first information is used to determine a transmit parameter of a first S-SSB. The method shown in FIG. 15 is also performed by the first node.

Referring to FIG. 15, Step S1510 is the same as Step S810, and details are not described herein again. If a result of Step S1510 is yes, Step S1520 is performed. If a result of Step S1510 is no, Step S1530 is performed.

In Step S1520, the transmit parameter of the first S-SSB is different from a first candidate parameter.

In Step S1530, the transmit parameter of the first S-SSB is determined as the first candidate parameter.

The plurality of possible implementations of the method shown in FIG. 4 are described above with reference to FIG. 8 and FIG. 10 to FIG. 15. Before or after Step S410 or Step S420 shown in FIG. 4 is performed, the first node may further receive second information from a second node or higher layer signalling. The second information is used to determine whether the first node transmits a second S-SSB, or the second information includes a second frequency, the second frequency is used to perform sidelink communication or sidelink discovery, and the sidelink communication or sidelink discovery is related to the second S-SSB.

In some embodiments, the second frequency is the same as the first frequency.

In some embodiments, the second frequency is different from the first frequency.

In some embodiments, the second information further includes a second threshold, and the second threshold is a threshold, different from a target threshold, in a plurality of candidate thresholds.

In some embodiments, the second threshold is the first reference threshold.

In some embodiments, a transmit parameter of the second S-SSB is a set of parameters, different from a target parameter, in a plurality of sets of candidate parameters.

In some embodiments, the transmit parameter of the second S-SSB is determined as the first candidate parameter.

In some embodiments, for transmission of the second S-SSB, reference may be made to Section 5.8.5.2 of 3GPP TS38.331.

With reference to FIG. 4 to FIG. 15, both the first information and the result of the first signal measurement may be used to determine whether to transmit the first S-SSB, and may also be used to determine the transmit parameter of the first S-SSB. Since Step S420 is optional, in a case in which no conflict occurs, the first node may form a plurality of combinations based on the first information and the result of the first signal measurement, to determine whether to transmit the first S-SSB and the transmit parameter of the first S-SSB. Through the newly introduced condition of determining whether to transmit an S-SSB, resources can be effectively used to perform initial beam pairing based on an S-SSB. The plurality of combinations are provided in the following embodiments.

In Embodiment 1, a first node may determine, by using only first information, whether to transmit a first S-SSB and a transmit parameter.

In Embodiment 2, a first node may determine, by using first information, whether to transmit a first S-SSB, and then determine a transmit parameter of the first S-SSB based on a result of first signal measurement. For example, if the first information indicates TRUE, the first node transmits the first S-SSB. Then, the result the first signal measurement performed by the first node is used to determine a transmission quantity corresponding to the first S-SSB within one period and/or a transmission period corresponding to the first S-SSB.

In Embodiment 3, a first node may determine a first threshold based on first information, and then determine, based on a relationship between a result of first signal measurement and a first threshold, whether to transmit a first S-SSB. For example, the result of the first signal measurement performed by the first node serves as a valid basis for determining whether to transmit the first S-SSB. However, the first threshold is determined depending on whether the first node performs initial beam pairing based on the first S-SSB. When the result of the first signal measurement is less than the first threshold, the first S-SSB is transmitted.

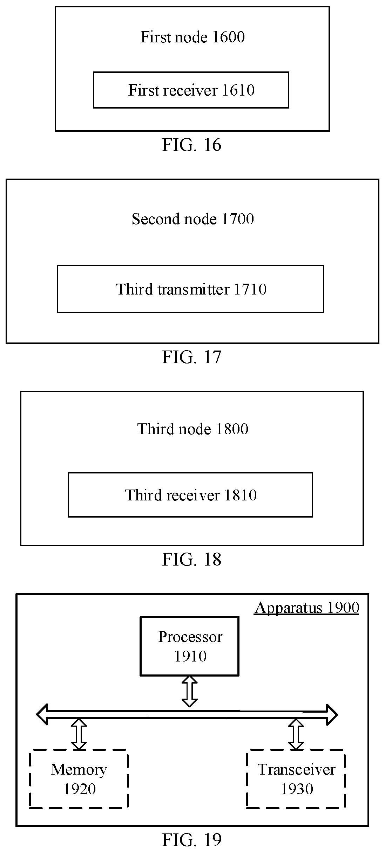

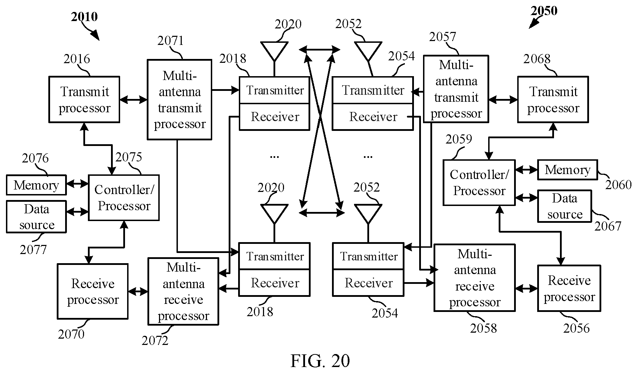

The method embodiments of the present application are described in detail above with reference to FIG. 1 to FIG. 15. Apparatus embodiments of the present application are described in detail below with reference to FIG. 16 and FIG. 20. It should be understood that the description of the method embodiments corresponds to the description of the apparatus embodiments, and therefore, for a part that is not described in detail, reference may be made to the foregoing method embodiments.

FIG. 16 is a first node used for wireless communication according to an embodiment of the present application. As shown in FIG. 16, a first node 1600 includes a first receiver 1610.

The first receiver 1610 may be configured to receive first information, and the first information is used to determine whether to perform a first operation. The first operation includes at least one of initial beam pairing, sidelink unicast link establishment, or sidelink beam management. The first information is used to determine whether to transmit a first sidelink-synchronization signal block related to the first operation, and/or the first information is used to determine a transmit parameter of the first sidelink-synchronization signal block.

In an embodiment, the first information indicates whether to perform the first operation; or the first information includes a first frequency, and the first frequency is used for the first operation, or the first frequency is not used for the first operation.

In an embodiment, the first information indicates that the first operation is to be performed, and the first operation is related to a first frequency; or the first information includes the first frequency, and the first frequency is used for the first operation; and the first node 1600 further includes a first transmitter that may be configured to transmit the first sidelink-synchronization signal block at the first frequency.

In an embodiment, the first information indicates that the first operation is not to be performed; or the first information includes a first frequency, and the first frequency is not used for the first operation; or the first node 1600 further includes a second transmitter that may be configured to skip transmission of the first sidelink-synchronization signal block.

In an embodiment, the first node 1600 further includes a first processor, which may be configured to perform first signal measurement. Whether to transmit the first sidelink-synchronization signal block is determined depending on whether a result of the first signal measurement is less than a first threshold, and the first information is used to determine the first threshold.

In an embodiment, the first threshold is one of a plurality of candidate thresholds, and the first information is used to determine the first threshold from the plurality of candidate thresholds.

In an embodiment, the plurality of candidate thresholds include a target threshold; and when the first information is used to determine that the first operation is to be performed, the first threshold is equal to the target threshold; when the first information is used to determine that the first operation is not to be performed, the first threshold is a candidate threshold, different from the target threshold, in the plurality of candidate thresholds.

In an embodiment, when the first information is used to determine that the first operation is to be performed, the first threshold is a sum of a first reference threshold and a first threshold offset, and the first threshold offset is not 0; when the first information is used to determine that the first operation is not to be performed, the first threshold is the first reference threshold.

In an embodiment, the transmit parameter of the first sidelink-synchronization signal block includes at least one of time allocation of the first sidelink-synchronization signal block, a transmission quantity corresponding to the first sidelink-synchronization signal block, or a transmission period corresponding to the first sidelink-synchronization signal block.

In an embodiment, the first node 1600 further includes a second processor, which may be configured to perform first signal measurement. A result of the first signal measurement is used to determine a transmit parameter of the first sidelink-synchronization signal block.

In an embodiment, the transmit parameter of the first sidelink-synchronization signal block is determined depending on whether the result of the first signal measurement is less than a first threshold. When the result of the first signal measurement is less than the first threshold, the transmit parameter of the first sidelink-synchronization signal block is determined based on a first candidate parameter, and at least one parameter in the transmit parameter of the first sidelink-synchronization signal block is different from the first candidate parameter. When the result of the first signal measurement is not less than the first threshold, the transmit parameter of the first sidelink-synchronization signal block is determined as the first candidate parameter.

In an embodiment, the transmit parameter of the first sidelink-synchronization signal block is one of a plurality of sets of candidate parameters, and at least one of the first information or the result of the first signal measurement is used to determine the transmit parameter of the first sidelink-synchronization signal block from the plurality of sets of candidate parameters.

In an embodiment, the plurality of sets of candidate parameters include a target parameter; and when the first information is used to determine that the first operation is to be performed, the transmit parameter of the first sidelink-synchronization signal block is set to the target parameter; when the first information is used to determine that the first operation is not to be performed, the transmit parameter of the first sidelink-synchronization signal block is set to a set of candidate parameters, different from the target parameter, in the plurality of sets of candidate parameters.

In an embodiment, the plurality of sets of candidate parameters include a target parameter. When the result of the first signal measurement is less than a first threshold, the transmit parameter of the first sidelink-synchronization signal block is set to the target parameter. When the result of the first signal measurement is not less than the first threshold, the transmit parameter of the first sidelink-synchronization signal block is set to a set of candidate parameters, different from the target parameter, in the plurality of sets of candidate parameters.

In an embodiment, when the first information is used to determine that the first operation is to be performed, the transmit parameter of the first sidelink-synchronization signal block is determined based on a first candidate parameter, and at least one parameter in the transmit parameter of the first sidelink-synchronization signal block is different from the first candidate parameter; when the first information is used to determine that the first operation is not to be performed, the transmit parameter of the first sidelink-synchronization signal block is determined as the first candidate parameter.

In an embodiment, the first receiver is further configured to receive second information, and the second information is used to determine whether to transmit a second sidelink-synchronization signal block. The second information includes a second frequency, the second frequency is used to perform sidelink communication or sidelink discovery, and the sidelink communication or sidelink discovery is related to the second sidelink-synchronization signal block.

In an embodiment, the first receiver 1610 may be a transceiver 1930. The first node 1600 may further include a processor 1910 and a memory 1920. Details are shown in FIG. 19.

FIG. 17 shows a second node used for wireless communication according to an embodiment of the present application. As shown in FIG. 17, a second node 1700 includes a third transmitter 1710.

The third transmitter 1710 may be configured to transmit first information to a first node, where the first information is used to determine whether the first node performs a first operation. The first operation includes at least one of initial beam pairing, sidelink unicast link establishment, or sidelink beam management, and the first information is used to determine whether the first node transmits a first sidelink-synchronization signal block related to the first operation, and/or the first information is used to determine a transmit parameter of the first sidelink-synchronization signal block.

In an embodiment, the first information indicates whether to perform the first operation; or the first information includes a first frequency, and the first frequency is used for the first operation, or the first frequency is not used for the first operation.

In an embodiment, the third transmitter is further configured to transmit second information to the first node, and the second information is used to determine whether the first node transmits a second sidelink-synchronization signal block. The second information includes a second frequency, the second frequency is used by the first node to perform sidelink communication or sidelink discovery, and the sidelink communication or sidelink discovery is related to the second sidelink-synchronization signal block.

In an embodiment, the third transmitter 1710 may be a transceiver 1930. The second node 1700 may further include a processor 1910 and a memory 1920. Details are shown in FIG. 19.

FIG. 18 shows a third node used for wireless communication according to an embodiment of the present application. As shown in FIG. 18, the third node 1800 includes a second receiver 1810.

The second receiver 1810 may be configured to perform reception of the first sidelink-synchronization signal block at a first frequency. The first sidelink-synchronization signal block is related to a first operation, the first operation includes at least one of initial beam pairing, sidelink unicast link establishment, or sidelink beam management, the first information is used to determine whether the first node performs the first operation, and the first information is further used to determine whether the first node transmits the first sidelink-synchronization signal block, and/or the first information is further used to determine a transmit parameter of the first sidelink-synchronization signal block.

In an embodiment, the first information indicates whether to perform the first operation; or the first information includes a first frequency, and the first frequency is used for the first operation, or the first frequency is not used for the first operation.

In an embodiment, the received first sidelink-synchronization signal block is used for the first operation.

In an embodiment, the second receiver 1810 may be a transceiver 1930. The third node 1800 may further include a processor 1910 and a memory 1920. Details are shown in FIG. 19.

FIG. 19 is a schematic structural diagram of a communication apparatus according to an embodiment of the present application. Dashed lines in FIG. 19 indicate that a unit or module is optional. The apparatus 1900 may be configured to implement the method described in the foregoing method embodiments. The apparatus 1900 may be a chip, a user equipment, or a network device.

The apparatus 1900 may include one or more processors 1910. The processor 1910 may support the apparatus 1900 in implementing the method described in the foregoing method embodiments. The processor 1910 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1900 may further include one or more memories 1920. The memory 1920 stores a program, and the program may be executed by the processor 1910, so that the processor 1910 executes the method described in the foregoing method embodiments. The memory 1920 may be separate from the processor 1910 or may be integrated into the processor 1910.

The apparatus 1900 may further include a transceiver 1930. The processor 1910 may communicate with another device or chip through the transceiver 1930. For example, the processor 1910 may transmit data to and receive data from another device or chip through the transceiver 1930.

FIG. 20 is a schematic diagram of hardware modules of a communications device according to an embodiment of the present application. Specifically, FIG. 20 is a block diagram of a first communications device 2050 and a second communications device 2010 communicating with each other in an access network.

The first communications device 2050 includes a controller/processor 2059, a memory 2060, a data source 2067, a transmit processor 2068, a receive processor 2056, a multi-antenna transmit processor 2057, a multi-antenna receive processor 2058, transmitters/receivers 2054, and antennas 2052.

The second communications device 2010 includes a controller/processor 2075, a memory 2076, a data source 2077, a receive processor 2070, a transmit processor 2016, a multi-antenna receive processor 2072, a multi-antenna transmit processor 2071, transmitters/receivers 2018, and antennas 2020.

During transmission from the second communications device 2010 to the first communications device 2050, at the second communications device 2010, an upper layer data packet from a core network or an upper layer data packet from the data source 2077 is provided to the controller/processor 2075. The core network and the data source 2077 represent all protocol layers above an L2 layer. The controller/processor 2075 implements functions of the L2 layer. During transmission from the second communications device 2010 to the first communications device 2050, the controller/processor 2075 provides header compression, encryption, packet segmentation and reordering, multiplexing between a logical channel and a transport channel, and allocation of radio resources of the first communications device 2050 based on various priority measurements. The controller/processor 2075 is further responsible for retransmission of a lost packet, and signalling to the first communications device 2050. The transmit processor 2016 and the multi-antenna transmit processor 2071 implement various signal processing functions of an L1 layer (namely, a physical layer). The transmit processor 2016 implements encoding and interleaving to facilitate forward error correction at the second communications device 2010, and mapping of signal clusters based on various modulation schemes (such as binary phase shift keying, quadrature phase shift keying, M-phase shift keying, and M-quadrature amplitude modulation). The multi-antenna transmit processor 2071 performs digital space precoding, including codebook-based precoding and non-codebook-based precoding, on a coded and modulated symbol, and beamforming processing, to generate one or more spatial streams. The transmit processor 2016 then maps each spatial stream to a subcarrier, multiplexes the mapped spatial stream with a reference signal (for example, a pilot) in time domain and/or frequency domain, and then uses an inverse fast Fourier transform to generate a physical channel that carries a time-domain multi-carrier symbol stream. Subsequently, the multi-antenna transmit processor 2071 performs an operation of analog precoding transmitting/beamforming on the time-domain multi-carrier symbol stream. Each transmitter 2018 converts a baseband multi-carrier symbol stream provided by the multi-antenna transmit processor 2071 into a radio frequency stream, and then provides the radio frequency stream for different antennas 2020.

During transmission from the second communications device 2010 to the first communications device 2050, at the first communications device 2050, each receiver 2054 receives a signal through a corresponding antenna 2052 of the receiver 2054. Each receiver 2054 recovers information modulated onto a radio frequency carrier, converts a radio frequency stream into a baseband multi-carrier symbol stream, and provides the baseband multi-carrier symbol stream for the receive processor 2056. The receive processor 2056 and the multi-antenna receive processor 2058 implement various signal processing functions of the L1 layer. The multi-antenna receive processor 2058 performs an operation of analog precoding receiving/beamforming on the baseband multi-carrier symbol stream from the receiver 2054. The receive processor 2056 converts, from time domain to frequency domain via fast Fourier transform, the baseband multi-carrier symbol stream obtained after the operation of analog precoding receiving/beamforming. **In** frequency domain, a physical-layer data signal and a reference signal are demultiplexed by the receive processor 2056. The reference signal is used for channel estimation; and the data signal is recovered after multi-antenna detection performed by the multi-antenna receive processor 2058, to obtain any spatial stream that uses the first communications device 2050 as a destination. Symbols on each spatial stream are demodulated and recovered in the receive processor 2056, and a soft decision is generated. The receive processor 2056 then decodes and de-interleaves the soft decision to recover upper layer data and a control signal transmitted by the second communications device 2010 on a physical channel. The upper layer data and the control signal are then provided to the controller/processor 2059. The controller/processor 2059 implements functions of the L2 layer. The controller/processor 2059 may be associated with a memory 2060 that stores program code and data. The memory 2060 may be referred to as a computer-readable medium. During transmission from the second communications device 2010 to the first communications device 2050, the controller/processor 2059 provides demultiplexing between a transport channel and a logical channel, packet reassembly, decryption, header decompression, and control signal processing, to recover an upper layer data packet from the second communications device 2010. The upper layer packet is then provided to all protocol layers above the L2 layer, or various control signals may be provided to the L3 layer for processing by the L3 layer.

During transmission from the first communications device 2050 to the second communications device 2010, at the first communications device 2050, an upper layer data packet is provided to the controller/processor 2059 by using the data source 2067. The data source 2067 represents all protocol layers above the L2 layer. Similar to the transmit function, at the second communications device 2010, described during the transmission from the second communications device 2010 to the first communications device 2050, the controller/processor 2059 implements header compression, encryption, packet segmentation and reordering, and multiplexing between a logical channel and a transport channel, to implement an L2 layer function for a user plane and a control plane. The controller/processor 2059 is further responsible for retransmission of a lost packet, and signalling to the second communications device 2010. The transmit processor 2068 performs modulation mapping and channel coding processing, and the multi-antenna transmit processor 2057 performs digital multi-antenna spatial precoding, including codebook-based precoding and non-codebook-based precoding, and beam forming processing. Then the transmit processor 2068 modulates a generated spatial stream into a multi-carrier/single-carrier symbol stream, and the multi-carrier/single-carrier symbol stream is provided to different antennas 2052 by using the transmitter 2054 after undergoing an analog precoding/beamforming operation in the multi-antenna transmit processor 2057. Each transmitter 2054 first converts a baseband symbol stream provided by the multi-antenna transmit processor 2057 into a radio frequency symbol stream, and then provides the radio frequency symbol stream for the antennas 2052.

During transmission from the first communications device 2050 to the second communications device 2010, a function at the second communications device 2010 is similar to the receive function, at the first communications device 2050, described during the transmission from the second communications device 2010 to the first communications device 2050. Each receiver 2018 receives a radio frequency signal through a corresponding antenna 2020 of the receiver 2018, converts the received radio frequency signal into a baseband signal, and provides the baseband signal for the multi-antenna receive processor 2072 and the receive processor 2070. The receive processor 2070 and the multi-antenna receive processor 2072 jointly implement functions of the L1 layer. The controller/processor 2075 implements functions of the L2 layer. The controller/processor 2075 may be associated with a memory 2076 that stores program code and data. The memory 2076 may be referred to as a computer-readable medium. During transmission from the first communications device 2050 to the second communications device 2010, the controller/processor 2075 provides demultiplexing between a transport channel and a logical channel, packet reassembly, decryption, header decompression, and control signal processing, to recover an upper layer data packet from the first communications device 2050. The upper layer data packet from the controller/processor 2075 may be provided to a core network or all protocol layers above the L2 layer, or various control signals may be provided to the core network or the L3 layer for processing by the L3 layer.

In an embodiment, the first communications device 2050 apparatus includes at least one processor and at least one memory. The at least one memory includes computer program code. The at least one memory and the computer program code are configured to be used together with the at least one processor. The first communications device 2050 apparatus at least receives first information, and the first information is used to determine whether to perform a first operation. The first operation includes at least one of initial beam pairing, sidelink unicast link establishment, or sidelink beam management, and the first information is used to determine whether to transmit a first sidelink-synchronization signal block related to the first operation, and/or the first information is used to determine a transmit parameter of the first sidelink-synchronization signal block.

In an embodiment, the first communications device 2050 apparatus includes a memory for storing a computer-readable instruction program, and the computer-readable instruction program generates actions when being executed by at least one processor. The actions include: receiving first information, where the first information is used to determine whether to perform a first operation. The first operation includes at least one of initial beam pairing, sidelink unicast link establishment, or sidelink beam management, and the first information is used to determine whether to transmit a first sidelink-synchronization signal block related to the first operation, and/or the first information is used to determine a transmit parameter of the first sidelink-synchronization signal block.

In an embodiment, the first communications device 2050 corresponds to the first node or the third node in the present application.

In an embodiment, the second communications device 2010 is corresponding to the second node in the present application.

In an embodiment, the first communications device 2050 is a user equipment, and the user equipment may serve as a relay node.

In an embodiment, the first communications device 2050 is a user equipment supporting V2X, and the user equipment may serve as a relay node.

In an embodiment, the first communications device 2050 is a user equipment supporting D2D, and the user equipment may serve as a relay node.

In an embodiment, the first communications device 2050 is a network-controlled repeater NCR.

In an embodiment, the first communications device 2050 is a relay wireless repeater.

In an embodiment, the first communications device 2050 is a relay.

In an embodiment, the second communications device 2010 is a base station.

In an embodiment, the first communications device 2050 corresponds to the first node in the present application. In an embodiment, the antenna 2052, the receiver 2054, the multi-antenna receive processor 2058, the receive processor 2056, and the controller/processor 2059 are configured to receive the first information in the present application.

In an embodiment, the antenna 2020, the transmitter 2018, the multi-antenna transmit processor 2071, the transmit processor 2016, and the controller/processor 2075 are configured to transmit the first information in the present application.

In an embodiment, the first communications device 2050 corresponds to the third node in the present application, the antenna 2052, the receiver 2054, the multi-antenna receiving processor 2058, the receive processor 2056, and the controller/processor 2059 are configured to receive the first sidelink-synchronization signal block in the present application.

An embodiment of the present application further provides a computer-readable storage medium for storing a program. The computer-readable storage medium may be applied to the terminal or the network device provided in embodiments of the present application, and the program causes a computer to execute the methods performed by the terminal or the network device in various embodiments of the present application.

An embodiment of the present application further provides a computer program product. The computer program product includes a program. The computer program product may be applied to a terminal or a network device provided in embodiments of the present application, and the program causes a computer to execute the methods performed by the terminal or the network device in various embodiments of the present application.

An embodiment of the present application further provides a computer program. The computer program may be applied to a terminal or a network device provided in embodiments of the present application, and the computer program causes a computer to execute the methods performed by the terminal or the network device in various embodiments of the present application.

It should be understood that the terms "system" and "network" in the present application may be used interchangeably. In addition, the terms used in the present application are only used to explain the specific embodiments of the present application, and are not intended to limit the present application. The terms "first", "second", "third", "fourth", and the like in the specification, claims, and drawings of the present application are used to distinguish between different objects, rather than to describe a specific order. In addition, the terms "include" and "have" and any variations thereof are intended to cover a non-exclusive inclusion.

In embodiments of the present application, "indication" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of the present application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of the present application, "predefined" or "pre-configured" may be implemented by pre-storing corresponding code, tables, or other forms that may be used to indicate related information in devices (for example, including a user equipment and a network device), and a specific implementation thereof is not limited in the present application. For example, predefined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In the several embodiments provided in the present application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual requirements to achieve the objectives of the solutions of embodiments.

In addition, functional units in embodiments of the present application may be integrated into one processing unit, or each of the units may exist alone physically, or two or more units are integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of the present application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center via a wired (such as a coaxial cable, an optical fiber, and a digital subscriber line (digital subscriber line, DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid state drive (SSD)), or the like.

The foregoing descriptions are merely specific implementations of the present application, but are not intended to limit the protection scope of the present application. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. A method for a first node used for wireless communication, comprising:
receiving first information, wherein the first information is used to determine whether to perform a first operation,
wherein the first operation comprises at least one of initial beam pairing, sidelink unicast link establishment, or sidelink beam management, and the first information is used to determine whether to transmit a first sidelink-synchronization signal block related to the first operation, and/or the first information is used to determine a transmit parameter of the first sidelink-synchronization signal block.

2. The method according to claim 1, wherein the first information indicates whether the first operation is to be performed; or the first information comprises a first frequency, and the first frequency is used for the first operation, or the first frequency is not used for the first operation.

3. The method according to claim 1 or 2, wherein
the first information indicates that the first operation is to be performed, and the first operation is related to a first frequency; or
the first information comprises the first frequency, and the first frequency is used for the first operation; and
the method further comprises:
transmitting the first sidelink-synchronization signal block at the first frequency.

4. The method according to claim 1 or 2, wherein:
the first information indicates the first operation is not to be performed,
or the first information comprises a first frequency, and the first frequency is not used for the first operation; and
the method further comprises:
skipping transmission of the first sidelink-synchronization signal block.

5. The method according to any one of claims 1 to 4, comprising:
performing first signal measurement,
wherein whether to transmit the first sidelink-synchronization signal block is determined depending on whether a result of the first signal measurement is less than a first threshold, and the first information is used to determine the first threshold.

6. The method according to claim 5, wherein the first threshold is one of a plurality of candidate thresholds, and the first information is used to determine the first threshold from the plurality of candidate thresholds.

7. The method according to claim 6, wherein the plurality of candidate thresholds comprise a target threshold; and when the first information is used to determine that the first operation is to be performed, the first threshold is equal to the target threshold; when the first information is used to determine that the first operation is not to be performed, the first threshold is a candidate threshold, different from the target threshold, in the plurality of candidate thresholds.

8. The method according to claim 5, wherein when the first information is used to determine that the first operation is to be performed, the first threshold is a sum of a first reference threshold and a first threshold offset, and the first threshold offset is not 0; when the first information is used to determine that the first operation is not to be performed, the first threshold is the first reference threshold.

9. The method according to any one of claims 1 to 8, wherein the transmit parameter of the first sidelink-synchronization signal block comprises at least one of time allocation of the first sidelink-synchronization signal block, a transmission quantity corresponding to the first sidelink-synchronization signal block, or a transmission period corresponding to the first sidelink-synchronization signal block.

10. The method according to any one of claims 1 to 4 or 9, comprising:
performing first signal measurement,
wherein a result of the first signal measurement is used to determine the transmit parameter of the first sidelink-synchronization signal block.

11. The method according to claim 10, wherein the transmit parameter of the first sidelink-synchronization signal block is determined depending on whether the result of the first signal measurement is less than a first threshold; and when the result of the first signal measurement is less than the first threshold, the transmit parameter of the first sidelink-synchronization signal block is determined based on a first candidate parameter, and at least one parameter in the transmit parameter of the first sidelink-synchronization signal block is different from the first candidate parameter; when the result of the first signal measurement is not less than the first threshold, the transmit parameter of the first sidelink-synchronization signal block is determined as the first candidate parameter.

12. The method according to claim 10, wherein the transmit parameter of the first sidelink-synchronization signal block is one of a plurality of sets of candidate parameters, and at least one of the first information or the result of the first signal measurement is used to determine the transmit parameter of the first sidelink-synchronization signal block from the plurality of sets of candidate parameters.

13. The method according to claim 12, wherein the plurality of sets of candidate parameters comprise a target parameter; and when the first information is used to determine that the first operation is to be performed, the transmit parameter of the first sidelink-synchronization signal block is set to the target parameter; when the first information is used to determine that the first operation is not to be performed, the transmit parameter of the first sidelink-synchronization signal block is set to a set of candidate parameters, different from the target parameter, in the plurality of sets of candidate parameters.

14. The method according to claim 12, wherein the plurality of sets of candidate parameters comprise a target parameter; and when the result of the first signal measurement is less than a first threshold, the transmit parameter of the first sidelink-synchronization signal block is set to the target parameter; when the result of the first signal measurement is not less than the first threshold, the transmit parameter of the first sidelink-synchronization signal block is set to a set of candidate parameters, different from the target parameter, in the plurality of sets of candidate parameters.

15. The method according to any one of claims 1 to 9, wherein when the first information is used to determine that the first operation is to be performed, the transmit parameter of the first sidelink-synchronization signal block is determined based on a first candidate parameter, and at least one parameter in the transmit parameter of the first sidelink-synchronization signal block is different from the first candidate parameter; when the first information is used to determine that the first operation is not to be performed, the transmit parameter of the first sidelink-synchronization signal block is determined as the first candidate parameter.

16. The method according to any one of claims 1 to 15, comprising:
receiving second information, wherein the second information is used to determine whether to transmit a second sidelink-synchronization signal block,
wherein the second information comprises a second frequency, the second frequency is used to perform sidelink communication or sidelink discovery, and the sidelink communication or sidelink discovery is related to the second sidelink-synchronization signal block.

17. A method for a second node used for wireless communication, comprising:
transmitting first information to a first node, wherein the first information is used to determine whether the first node performs a first operation,
wherein the first operation comprises at least one of initial beam pairing, sidelink unicast link establishment, or sidelink beam management, and the first information is used to determine whether the first node transmits a first sidelink-synchronization signal block related to the first operation, and/or the first information is used to determine a transmit parameter of the first sidelink-synchronization signal block.

18. The method according to claim 17, wherein the first information indicates whether the first node performs the first operation; or the first information comprises a first frequency, and the first frequency is used for the first operation, or the first frequency is not used for the first operation.

19. The method according to claim 17 or 18, comprising:
transmitting second information to the first node, wherein the second information is used to determine whether the first node transmits a second sidelink-synchronization signal block,
wherein the second information comprises a second frequency, the second frequency is used by the first node to perform sidelink communication or sidelink discovery, and the sidelink communication or sidelink discovery is related to the second sidelink-synchronization signal block.

20. A method for a third node used for wireless communication, comprising:
performing reception of a first sidelink-synchronization signal block at a first frequency,
wherein the first sidelink-synchronization signal block is related to a first operation, the first operation comprises at least one of initial beam pairing, sidelink unicast link establishment, or sidelink beam management, first information is used to determine whether a first node performs the first operation, and the first information is further used to determine whether the first node transmits the first sidelink-synchronization signal block, and/or the first information is further used to determine a transmit parameter of the first sidelink-synchronization signal block.

21. The method according to claim 20, wherein the first information indicates whether the first node performs the first operation; or the first information comprises a first frequency, and the first frequency is used for the first operation, or the first frequency is not used for the first operation.

22. The method according to claim 20 or 21, comprising:
performing the first operation by using the received first sidelink-synchronization signal block.

23. A first node used for a wireless communication, comprising:
a first receiver, receiving first information, wherein the first information is used to determine whether to perform a first operation,
wherein the first operation comprises at least one of initial beam pairing, sidelink unicast link establishment, or sidelink beam management, and the first information is used to determine whether to transmit a first sidelink-synchronization signal block related to the first operation, and/or the first information is used to determine a transmit parameter of the first sidelink-synchronization signal block.

24. The first node according to claim 23, wherein the first information indicates whether the first operation is to be performed; or the first information comprises a first frequency, and the first frequency is used for the first operation, or the first frequency is not used for the first operation.

25. The first node according to claim 23 or 24, wherein the first information indicates that the first operation is to be performed, and the first operation is related to a first frequency; or the first information comprises the first frequency, and the first frequency is used for the first operation; and
the first node further comprises a first transmitter, transmitting the first sidelink-synchronization signal block at the first frequency.

26. The first node according to claim 23 or 24, wherein the first information indicates that the first operation is not to be performed; or the first information comprises a first frequency, and the first frequency is not used for the first operation; and
the first node further comprises a second transmitter, skipping transmission of the first sidelink-synchronization signal block.

27. The first node according to any one of claims 23 to 26, further comprising:
a first processor, performing first signal measurement,
wherein whether to transmit the first sidelink-synchronization signal block is determined depending on whether a result of the first signal measurement is less than a first threshold, and the first information is used to determine the first threshold.

28. The first node according to claim 27, wherein the first threshold is one of a plurality of candidate thresholds, and the first information is used to determine the first threshold from the plurality of candidate thresholds.

29. The first node according to claim 28, wherein the plurality of candidate thresholds comprise a target threshold; and when the first information is used to determine that the first operation is to be performed, the first threshold is equal to the target threshold; when the first information is used to determine that the first operation is not to be performed, the first threshold is a candidate threshold, different from the target threshold, in the plurality of candidate thresholds.

30. The first node according to claim 27, wherein when the first information is used to determine that the first operation is to be performed, the first threshold is a sum of a first reference threshold and a first threshold offset, and the first threshold offset is not 0; when the first information is used to determine that the first operation is not to be performed, the first threshold is the first reference threshold.

31. The first node according to any one of claims 23 to 30, wherein the transmit parameter of the first sidelink-synchronization signal block comprises at least one of time allocation of the first sidelink-synchronization signal block, a transmission quantity corresponding to the first sidelink-synchronization signal block, or a transmission period corresponding to the first sidelink-synchronization signal block.

32. The first node according to any one of claims 23 to 26, and 31, further comprising:
a second processor, performing first signal measurement,
wherein a result of the first signal measurement is used to determine the transmit parameter of the first sidelink-synchronization signal block.

33. The first node according to claim 32, wherein the transmit parameter of the first sidelink-synchronization signal block is determined depending on whether the result of the first signal measurement is less than a first threshold; and when the result of the first signal measurement is less than the first threshold, the transmit parameter of the first sidelink-synchronization signal block is determined based on a first candidate parameter, and at least one parameter in the transmit parameter of the first sidelink-synchronization signal block is different from the first candidate parameter; when the result of the first signal measurement is not less than the first threshold, the transmit parameter of the first sidelink-synchronization signal block is determined as the first candidate parameter.

34. The first node according to claim 32, wherein the transmit parameter of the first sidelink-synchronization signal block is one of a plurality of sets of candidate parameters, and at least one of the first information or the result of the first signal measurement is used to determine the transmit parameter of the first sidelink-synchronization signal block from the plurality of sets of candidate parameters.

35. The first node according to claim 34, wherein the plurality of sets of candidate parameters comprise a target parameter; and when the first information is used to determine that the first operation is to be performed, the transmit parameter of the first sidelink-synchronization signal block is set to the target parameter; when the first information is used to determine that the first operation is not to be performed, the transmit parameter of the first sidelink-synchronization signal block is set to a set of candidate parameters, different from the target parameter, in the plurality of sets of candidate parameters.

36. The first node according to claim 34, wherein the plurality of sets of candidate parameters comprise a target parameter; and when the result of the first signal measurement is less than a first threshold, the transmit parameter of the first sidelink-synchronization signal block is set to the target parameter; when the result of the first signal measurement is not less than the first threshold, the transmit parameter of the first sidelink-synchronization signal block is set to a set of candidate parameters, different from the target parameter, in the plurality of sets of candidate parameters.

37. The first node according to any one of claims 23 to 31, wherein when the first information is used to determine that the first operation is to be performed, the transmit parameter of the first sidelink-synchronization signal block is determined based on a first candidate parameter, and at least one parameter in the transmit parameter of the first sidelink-synchronization signal block is different from the first candidate parameter; when the first information is used to determine that the first operation is not to be performed, the transmit parameter of the first sidelink-synchronization signal block is determined as the first candidate parameter.

38. The first node according to any one of claims 23 to 37, wherein the first receiver is further configured to receive second information, and the second information is used to determine whether to transmit a second sidelink-synchronization signal block,
wherein the second information comprises a second frequency, the second frequency is used to perform sidelink communication or sidelink discovery, and the sidelink communication or sidelink discovery is related to the second sidelink-synchronization signal block.

39. A second node used for wireless communication, comprising:
a third transmitter, transmitting first information to a first node, wherein the first information is used to determine whether the first node performs a first operation,
wherein the first operation comprises at least one of initial beam pairing, sidelink unicast link establishment, or sidelink beam management, and the first information is used to determine whether the first node transmits a first sidelink-synchronization signal block related to the first operation, and/or the first information is used to determine a transmit parameter of the first sidelink-synchronization signal block.

40. The second node according to claim 39, wherein the first information indicates whether the first node performs the first operation; or the first information comprises a first frequency, and the first frequency is used for the first operation, or the first frequency is not used for the first operation.

41. The second node according to claim 39 or 40, wherein the third transmitter is further configured to transmit second information to a first node, and the second information is used to determine whether the first node transmits a second sidelink-synchronization signal block,
wherein the second information comprises a second frequency, the second frequency is used by the first node to perform sidelink communication or sidelink discovery, and the sidelink communication or sidelink discovery is related to the second sidelink-synchronization signal block.

42. A third node used for wireless communication, comprising:
a second receiver, performing reception of a first sidelink-synchronization signal block at a first frequency,
wherein the first sidelink-synchronization signal block is related to a first operation, the first operation comprises at least one of initial beam pairing, sidelink unicast link establishment, or sidelink beam management, the first information is used to determine whether the first node performs the first operation, and the first information is further used to determine whether the first node transmits the first sidelink-synchronization signal block, and/or the first information is further used to determine a transmit parameter of the first sidelink-synchronization signal block.

43. The third node according to claim 42, wherein the first information indicates whether the first node performs the first operation; or the first information comprises a first frequency, and the first frequency is used for the first operation, or the first frequency is not used for the first operation.

44. The third node according to claim 42 or 43, comprising:
the first sidelink-synchronization signal block that is received is used for performing the first operation.

45. A node used for wireless communication, comprising a transceiver, a memory, and a processor, wherein the memory is configured to store a program, and the processor is configured to invoke the program in the memory and control the transceiver to receive or transmit a signal, so as to cause the node to execute the method according to any one of claims 1 to 16, 17 to 19, or 20 to 22.

46. An apparatus, comprising a processor, invoking a program from a memory to cause the apparatus to execute the method according to any one of claims 1 to 16, 17 to 19, or 20 to 22.

47. A chip, comprising a processor, invoking a program from a memory to cause a device installed with the chip to execute the method according to any one of claims 1 to 16, 17 to 19, or 20 to 22.

48. A computer-readable storage medium, wherein the computer-readable storage medium stores a program, and the program causes a computer to execute the method according to any one of claims 1 to 16, 17 to 19, or 20 to 22.

49. A computer program product, comprising a program, wherein the program causes a computer to execute the method according to any one of claims 1 to 16, 17 to 19, or 20 to 22.

50. A computer program, wherein the computer program causes a computer to execute the method according to any one of claims 1 to 16, 17 to 19, or 20 to 22.
